# EUROPÄISCHE PATENTSCHRIFT

(11) **EP 2 758 189 B1**
(45) Veröffentlichungstag und Bekanntmachung des Hinweises auf die Patenterteilung: **31.08.2016**
(21) Anmeldenummer: 12766043.9
(22) Anmeldetag: 20.09.2012
(51) Int. Cl.: B08B 3/00, B08B 3/04, G01M 99/00

(54) **REINIGUNGSANLAGE UND VERFAHREN**
CLEANING EQUIPMENT AND METHOD
INSTALLATION ET PROCEDE DE NETTOYAGE

(30) Priorität: 20.09.2011 DE 102011083081; 17.01.2012 DE 102012200612; 17.01.2012 DE 102012200614
(43) Veröffentlichungstag der Anmeldung: 30.07.2014
(73) Patentinhaber: Dürr Ecoclean GmbH, 70794 Filderstadt (DE)
(72) Erfinder: KREIS, Thomas, 57489 Drolshagen/Schlade (DE); DAVID, Hermann-Josef, 52156 Monschau (DE); KÄSKE, Egon, 52078 Aachen (DE)
(74) Vertreter: Gauss, Nikolai
(86) Internationale Anmeldenummer: PCT/EP2012/068510
(87) Internationale Veröffentlichungsnummer: WO 2013/041608

(56) Entgegenhaltungen:
- WO-A1-02/15255
- WO-A1-2011/061097
- DE-A1- 3 424 711
- DE-A1-102007 016 830
- DE-C1- 4 322 870
- US-A- 5 832 584

## Beschreibung

Die Erfindung betrifft eine Anlage für das Reinigen von Werkstücken. Darüber hinaus betrifft die Erfindung ein Verfahren zum Überwachen einer Anlage für das Reinigen von Werkstücken sowie ein Verfahren zum Steuern wenigstens eines Prozessparameters für das Reinigen von Werkstücken in einer solchen Anlage.

Ein Werkstück im Sinne der Erfindung kann ein beliebiger Gegenstand sein, insbesondere ein Bauteil für ein komplexes System oder eine aus mehreren Bauteilen zusammengesetzte Baugruppe.

Schmutzpartikel, insbesondere Spangut, Staub, Gusssand oder auch Flüssigkeitströpfchen können die Funktion von industriell hergestellten Produkten, wie z. B. Einspritzdüsen für Brennkraftmaschinen, beeinträchtigen. Die Sauberkeit von Werkstücken in industriellen Produktionsprozessen ist somit von großer Bedeutung.

In der industriellen Fertigung werden deshalb Anlagen für das Reinigen von Werkstücken eingesetzt. In solchen Reinigungsanlagen werden die Werkstücke mit Fluid gereinigt, insbesondere mit Flüssigkeit, wie z.B. Wasser, das vorzugsweise mit Reinigungszusätzen versehen ist, oder mit Flüssigkeiten, die Kohlenwasserstoffe enthalten. Für das Reinigen von Werkstücken werden auch gasförmige Fluide eingesetzt, z.B. Druckluft. Das in Reinigungsanlagen verwendete Reinigungsfluid wird in der Regel umgewälzt. Das Reinigungsfluid wird in industriellen Anlagen über Zeiträume eingesetzt, die oft mehrere Monate betragen. Die Reinigungswirkung von umgewälztem Reinigungsfluid ist im Regelfall nicht konstant. Sie hängt insbesondere von partikulären und filmischen Verunreinigungen ab, die bei der Reinigung von Werkstücken in das Reinigungsfluid eingetragen werden. Die Verunreinigung von Reinigungsfluid führt zu einem Nachlassen der Reinigungswirkung. Weil auch mit aufwändigen Aufbereitungssystemen Verunreinigungen nicht vollständig entfernt werden können, ist es in herkömmlichen Reinigungsanlagen üblich, die für das Umwälzen von Reinigungsfluid erforderlichen Pumpen für einen Fluiddurchsatz anzusteuern, der so groß ist, dass auch bei verschmutztem Reinigungsfluid eine vorgegebene Reinigungswirkung gewährleistet ist. Ein damit verbundener hoher Energieverbrauch beim Anlagenbetrieb wird dabei in Kauf genommen.

Wenn Reinigungsanlagen fehlerhaft arbeiten, besteht die Gefahr, dass nur unzureichend gereinigte, verschmutzte Werkstücke weiterverarbeitet und in komplexe Baugruppen montiert werden. Das Gewährleisten der Sauberkeit von Werkstücken ist daher insbesondere vor Zwischen- und Endmontagen wichtig. Um die Funktionen von Reinigungsanlagen zu überwachen, ist es bekannt, im Rahmen von Stichproben einzelne Werkstücke aus einer Produktionslinie zu nehmen und in einer von der Produktionslinie getrennten Prüfstation auf eine Verschmutzung zu untersuchen.

Die DE 43 22 870 C1 gibt an, das Reinigen der Oberfläche von Gegenständen in industriellen Produktionsanlagen zu überwachen und zu steuern, indem der Werkstück-Verschmutzungsgrad vor und nach dem Reinigen mittels Bildverarbeitung ermittelt und bei Über- oder Unterschreiten eines Grenzwerts ein Steuersignal für eine Reinigungsprozedur generiert wird.

In der DE 34 24 711 A1 wird vorgeschlagen, in einer Reinigungsanlage die Reinigungsdauer so einzustellen, dass der mit einer elektrischen Leitfähigkeitsmessung ermittelte Verschmutzungsgrad des Reinigungsmittels vor und nach dem Auftreffen auf den zu reinigenden Gegenstand der gleiche ist.

Die WO 2011/061097 A1 beschreibt eine Reinigungsanlage für Behältnisse, deren Verschmutzungsgrad vor dem Reinigen ermittelt wird, um den Reinigungsvorgang in der Anlage an den ermittelten Verschmutzungsgrad anzupassen.

Die DE 10 2007 016 830 A1 offenbart eine Vorrichtung für das Reinigen von Oberflächen, in welcher der Verschmutzungsgrad des dafür eingesetzten Reinigungsfluids mit einer Kamera erfasst und die Oberfläche eines Werkstücks nach dem Reinigen mit einer Sensoreinrichtung abgetastet wird.

Aufgabe der Erfindung ist es, das industrielle Reinigen von Werkstücken mit einer gleichbleibenden, hohen, vorgegebenen Reinigungsqualität bei großen Werkstück-Stückzahlen zu ermöglichen.

Diese Aufgabe wird durch eine Anlage mit den Merkmalen des Anspruchs 1 und ein Verfahren mit den Merkmalen des Anspruchs 13 gelöst. Vorteilhafte Weiterbildungen der Erfindung sind in den abhängigen Ansprüchen angegeben.

Eine Idee der Erfindung ist es, eine Anlage für das Reinigen von Werkstücken mit einer Baugruppe für das Überwachen eines Anlagen-Betriebszustands auszubilden, die mit einer Einrichtung für das vorzugsweise fortlaufende Erfassen der Eingangsverschmutzung von der Anlage oder Reinigungsstationen in der Anlage zugeführten Werkstücken und für das vorzugsweise fortlaufende Erfassen einer Restverschmutzung von in der Anlage oder in einer Reinigungsstation in der Anlage gereinigten Werkstücken verbunden ist.

Erfindungsgemäß kann das Erfassen der Eingangsverschmutzung und /oder das Erfassen der Restverschmutzung von Werkstücken nicht nur in regelmäßigen oder unregelmäßigen Intervallen erfolgen, sondern auch nach Art einer Stichprobe punktuell, aber auch fortlaufend kontinuierlich.

Die Verbindung der Baugruppe mit der Einrichtung für das vorzugsweise fortlaufende Erfassen einer Eingangsverschmutzung und das fortlaufende Erfassen einer Restverschmutzung kann dabei nicht nur als galvanische Verbindung ausgeführt sein, sondern auch als drahtlose Verbindung, z.B. als Funkverbindung. Die Erfinder haben herausgefunden, dass sich mit dieser Maßnahme sehr schnell erkennen lässt, dass eine Anlage für das Reinigen von Werkstücken fehlerhaft arbeitet.

Eine Idee der Erfindung ist, dass die Baugruppe einen Rechner enthält, der aus der vorzugsweise fortlaufend erfassten Eingangsverschmutzung und der vorzugsweise fortlaufend erfassten Restverschmutzung einen Anlagen-Betriebszustand ermittelt. Indem die Baugruppe einen Warnsignalgenerator für das Anzeigen einer in dem Rechner aus dem ermittelten AnlagenBetriebszustand abgeleiteten Anlagen-Fehlfunktion aufweist, kann Bedienpersonen in einer industriellen Fertigungsanlage eine ermittelte AnlagenFehlfunktion sicher und zuverlässig zur Anzeige gebracht werden.

Eine solche Anlage ermöglicht z.B. auch eine Trendanalyse der Verschmutzung von Werkstücken in einem laufenden Fertigungsprozess. Darüber hinaus ermöglicht eine solche Anlage insbesondere das Erkennen einer dem Reinigen vorgelagerten Bearbeitung von Werkstücken mit Werkzeugen, die fehlerhaft sind und die deshalb stärker verschmutzt sind oder mit Schmutzpartikeln in Form von Spänen befrachtet sind, die eine charakteristische Spanform haben.

Erfindungsgemäß ermittelt der Rechner den Anlagen-Betriebszustand aus einem fortlaufenden Vergleich einer Eingangsverschmutzung von Werkstücken mit einem ersten Schwellwert und einer Ausgangsverschmutzung von Werkstücken mit einem zweiten Schwellwert. Insbesondere ist es eine Idee der Erfindung, dass der Rechner auf eine Anlagen-Fehlfunktion schließt, wenn die fortlaufend ermittelte Eingangsverschmutzung den ersten Schwellwert unterschreitet und die fortlaufend ermittelte Ausgangsverschmutzung den zweiten Schwellwert überschreitet, und/oder wenn die fortlaufend ermittelte Eingangsverschmutzung den ersten Schwellwert überschreitet und die fortlaufend ermittelte Ausgangsverschmutzung den zweiten Schwellwert überschreitet, und/oder wenn die fortlaufend ermittelte Ausgangsverschmutzung für aufeinanderfolgende Werkstücke im Wesentlichen gleichbleibend ist und den zweiten Schwellwert dauerhaft mit einem im wesentlichen gleichbleibenden Betrag überschreitet.

Eine Idee der Erfindung ist auch, dass die Baugruppe einen Rechner enthält, der aus der fortlaufend erfassten Eingangsverschmutzung und der fortlaufend erfassten Restverschmutzung wenigstens einen Prozessparameter eines Reinigungsvorgangs in der Anlage berechnet, der von der Baugruppe dann eingestellt wird, um damit eine gewünschte Reinigungsqualität von in der Anlage gereinigten Werkstücken zu erzielen.

Erfindungsgemäß kann auch hier das Erfassen der Eingangsverschmutzung und /oder das Erfassen der Restverschmutzung von Werkstücken nicht nur in regelmäßigen oder unregelmäßigen Intervallen erfolgen, sondern auch nach Art einer Stichprobe punktuell, alternativ hierzu aber auch fortlaufend kontinuierlich.

Eine Idee der Erfindung ist es dabei insbesondere, eine Reinigungsanlage mit variablen Prozessparametern zu betreiben und dabei den Grad der Verschmutzung von Werkstücken zu berücksichtigen.

Von Vorteil ist es, wenn der Rechner den Prozessparameter in Abhängigkeit von der vorzugsweise fortlaufend erfassten Eingangsverschmutzung mit einer von der vorzugsweise fortlaufend erfassten Restverschmutzung abhängigen Funktionsvorschrift berechnet. Die Erfinder haben erkannt, dass sich eine gleichbleibende, von der Eingangsverschmutzung von Werkstücken weitgehend unabhängige Reinigungsqualität gewährleisten lässt, indem der Rechner die von der Restverschmutzung abhängige Funktionsvorschrift mit einem Regelkreis aufgrund einer Abweichung der erfassten Restverschmutzung von einem Restverschmutzungs-Sollwert ermittelt. Diese Funktionsvorschrift kann z.B. in einem Datenspeicher des Rechners als ein Kennlinienfeld abgelegt sein.

Die Baugruppe kann damit den wenigstens einen Prozessparameter, insbesondere in Abhängigkeit eines mittels einer Einrichtung für das Erfassen einer Restverschmutzung eines in der Anlage gereinigten Werkstücks und einer Einrichtung für das Erfassen einer Eingangsverschmutzung eines Werkstücks vor einem Reinigen in der Anlage erfassten Reinigungserfolgs einstellen.

Unter dem Reinigungserfolg wird dabei eine Abweichung einer für ein Werkstück erfassten Restverschmutzung zu einem Sollwert oder eine aus der Eingangs- und der Restverschmutzung eines Werkstücks ermittelte Größe verstanden.

Der wenigstens eine Prozessparameter kann z.B. die Temperatur des Reinigungsfluids in dem Reinigungsabschnitt und/oder die chemische Zusammensetzung des Reinigungsfluids sein, etwa der Anteil von Säuren und/oder Laugen und/oder Tensiden in dem Reinigungsfluid. Alternativ oder zusätzlich kann es sich aber bei dem Prozessparameter auch um den Druck des Reinigungsfluids in dem Reinigungsabschnitt handeln und/oder den Volumenstrom, mit dem in dem Reinigungsabschnitt ein Werkstück beaufschlagt wird. Der Prozessparameter kann auch die Länge eines Zeitintervalls für das Beaufschlagen eines Werkstücks mit Reinigungsfluid und/oder die Intensität eines in das Reinigungsfluid eingekoppelten Ultraschallsignals für das Reinigen eines Werkstücks umfassen.

Insbesondere kann die Einrichtung für das Erfassen einer Restverschmutzung eines in der Anlage gereinigten Werkstücks oder für das Erfassen einer Eingangsverschmutzung eines Werkstücks vor einem Reinigen in der Anlage ein Abbildungssystem für das optische Erfassen einer Oberfläche eines Werkstücks enthalten. Dieses Abbildungssystem dient dazu, eine Werkstückoberfläche zu untersuchen, bevor das Werkstück in der Reinigungsstation gereinigt wird, während es gereinigt wird oder nachdem es gereinigt wurde. Bevorzugt enthält die Einrichtung für das Analysieren eine Rechnereinheit und umfasst ein Computerprogramm für das Erkennen von Schmutzpartikeln auf der Oberfläche des Werkstücks. Um Schmutzpartikel zu erkennen, kann das Computerprogramm z.B. für das Auswerten des Kontrastes einer Werkstückoberfläche ausgelegt sein.

Das Abbildungssystem kann insbesondere eine in Werkstückbohrungen einführbare Endoskopsonde umfassen. Bevorzugt hat diese Endoskopsonde eine Lichtquelle für das Beleuchten einer Wandung der Werkstückbohrung. Günstigerweise gibt es in der Endoskopsonde ein Weitwinkelobjektiv für das optische Abbilden einer solchen Wandung auf einem Lichtsensor. Von Vorteil ist eine Positioniereinrichtung für die Endoskopsonde, mit der diese relativ zu einem Werkstück verlagert werden kann.

Die Einrichtung für das Erfassen einer Eingangs- und/oder Restverschmutzung von Werkstücken kann ein System für das Bestimmen einer Schmutzpartikelfracht in für das Reinigen eines Werkstücks mittels Spülen eingesetztem Reinigungsfluid aufweisen. Hierfür ist es möglich, das System mit einer Lichtquelle auszubilden, die Lichtstrahlen erzeugt, welche ein Testvolumen durchsetzen, in dem sich Reinigungsfluid befindet. Mit einem optischen Sensor für das Erfassen der Intensität der das Reinigungsfluid-Testvolumen durchsetzenden Lichtstrahlen kann dann die Schmutzpartikelfracht des Reinigungsfluids in dem Testvolumen detektiert werden.

Damit die Lichtquelle und der Sensor außerhalb eines Leistungssystems angeordnet werden können, ist es günstig, das Leitungssystem für das Führen von Reinigungsfluid mit einem für Lichtstrahlen wenigstens teilweise durchsichtigen Leitungsabschnitt auszubilden.

Um in einem solchen System für das Bestimmen der Schmutzpartikelfracht von Reinigungsfluid Falschsignale zu unterbinden, ist eine Einrichtung für das Entfernen von Luftblasen aus Reinigungsfluid von Vorteil, das durch den Lichtstrahl gefördert wird. Eine solche Einrichtung kann z.B. ein Pufferbehälter sein, in dem eine Ultraschallsonde angeordnet ist oder in dem das Reinigungsfluid gegenüber dem Atmosphärendruck mit einem Unterdruck oder einem Überdruck beaufschlagt wird.

Eine Idee der Erfindung ist auch, in einer Anlage für das Reinigen von Werkstücken in Abhängigkeit eines erfassten Verschmutzungs- bzw. Sauberkeitszustands eines in der Anlage gereinigten Werkstücks und/oder eines erfassten Verschmutzungs- bzw. Sauberkeitszustands eines der Anlage zugeführten Werkstücks das Reinigen des Werkstücks in der Anlage zu wiederholen und gegebenenfalls mehrfach durchzuführen. Erfindungsgemäß enthält die Anlage hierfür eine Einrichtung, die in Abhängigkeit des erfassten Verschmutzungszustands eines in der Anlage gereinigten Werkstücks und/oder eines Werkstücks vor einem Reinigen in der Anlage das Werkstück nach einem Reinigungsvorgang in der Anlage freigibt oder der Anlage von neuem zuführt, um dann den Reinigungsvorgang erneut durchzuführen.

In einem erfindungsgemäßen Verfahren für das industrielle Reinigen von Werkstücken werden sequentiell aufeinanderfolgend in einer Reinigungsstation Werkstücke mit Reinigungsfluid beaufschlagt. Dabei wird vorzugsweise fortlaufend der Verschmutzungszustand eines in der Anlage oder in einer Reinigungsstation in der Anlage gereinigten Werkstücks und/oder ein Verschmutzungszustand eines Werkstücks vor einem Reinigen in der Anlage oder in einer Reinigungsstation der Anlage erfasst, um darauf in Abhängigkeit des erfassten Verschmutzungszustands wenigstens einen Prozessparameter (P) eines Reinigungsvorgangs einzustellen.

Eine Idee der Erfindung ist es auch, den sich bei einem Werkstück einstellenden Reinigungserfolg zu ermitteln. In diesem Fall wird in Abhängigkeit des für ein Werkstück ermittelten Reinigungserfolgs wenigstens ein Prozessparameter für das optimierte Reinigen eines dem analysierten Werkstück in der Reinigungsstation folgenden Werkstücks eingestellt. Unter dem Reinigungserfolg wird dabei eine Abweichung einer für ein Werkstück erfassten Ausgangsverschmutzung zu einem Sollwert oder eine aus der Eingangs- und Ausgangsverschmutzung eines Werkstücks ermittelte, vorzugsweise quantitative Größe verstanden.

Ein solcher Prozessparameter für das optimierte Reinigen kann z.B. die Temperatur des Reinigungsfluids in der Reinigungsstation sein und/oder die chemische Zusammensetzung des Reinigungsfluids, der Druck des Reinigungsfluids in einer Reinigungsstation und/oder dessen Volumenstrom. Bei einem Prozessparameter kann es sich aber alternativ oder zusätzlich auch um die Länge eines Zeitintervalls für die Reinigung handeln und/oder auch um die Intensität eines in das Reinigungsfluid eingekoppelten Ultraschallsignals für die Werkstückreinigung. Ein Prozessparameter für das optimierte Reinigen kann auch eine der Anlage pro Zeiteinheit zugeführte Anzahl von Werkstücken sein.

Um eine Verschmutzung bzw. Sauberkeit von Werkstücken zu ermitteln, kann z. B. auch eine auf einer Oberfläche des Werkstücks anhaftende Schmutzpartikelfracht bestimmt werden. Darüber hinaus ist es möglich, eine solche Verschmutzung bzw. Sauberkeit zu erfassen, indem in Reinigungsfluid, mit dem das Werkstück beaufschlagt wurde, eine Schmützpartikelfracht bestimmt wird, z.B. mit einem optischen oder auch induktiven Messverfahren.

In einem erfindungsgemäßen Verfahren für das Überwachen einer Anlage für das Reinigen von Werkstücken in einer Reinigungsstation wird mit einer Messeinrichtung ein Wert für eine Schmutzpartikelfracht und/oder für einen Tensidgehalt und/oder für einen PH-Wert in einem Testvolumen eines für das Spülen eines Werkstücks eingesetzten Reinigungsfluids fortlaufend ermittelt. Aus einem Vergleich des fortlaufend ermittelten Werts mit einem Schwellwert kann dann auf eine Anlagen-Fehlfunktion geschlossen werden.

Im Folgenden wird die Erfindung anhand der in der Zeichnung in schematischer Weise dargestellten Ausführungsbeispiele näher erläutert.

Es zeigen:
- Fig. 1: eine Reinigungsanlage mit einer Regeleinrichtung für einen Prozessparameter eines Reinigungsvorgangs;
- Fig. 2: eine Reinigungsanlage mit einer Baugruppe für die Anlagenüberwachung;
- Fig. 3: bis Fig. 5 eine in der Reinigungsanlage erfasste Eingangs- und Restverschmutzung von Werkstücken;
- Fig. 6: ein System für das Bestimmen einer Schmutzpartikelfracht in Reinigungsfluid; und
- Fig.: 7 ein System für das Analysieren einer Eingangs- und Restverschmutzung von Werkstücken in einer Reinigungsanlage.

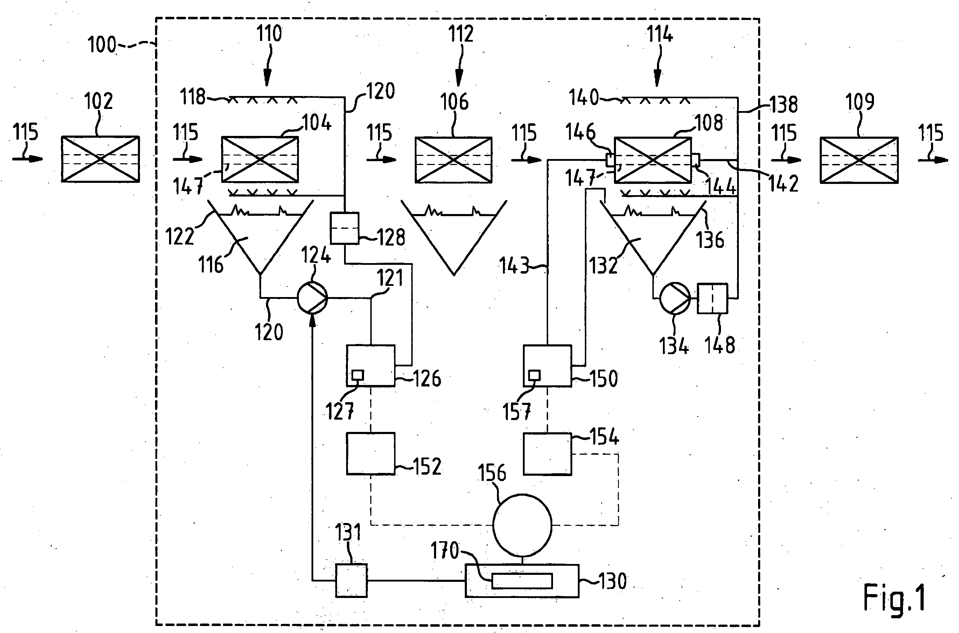

Die in der Fig. 1 gezeigte Anlage 100 ist in eine Produktionslinie (nicht gezeigt) integriert. Für das Reinigen von Werkstücken 102, 104, 106, 108 hat die Anlage 100 Reinigungsstationen bzw. Reinigungsabschnitte 110, 112, 114. In den Reinigungsstationen bzw. Reinigungsabschnitten 110, 112, 114 können die Werkstücke mit einem Reinigungsfluid gereinigt werden. In der Anlage 100 gibt es eine Fördervorrichtung (nicht gezeigt), mit der die Werkstücke 102, 104, 106, 108, 110 durch die Reinigungsstationen 110, 112, 114 automatisch in der Richtung der Pfeile 115 bewegt werden können. In der Reinigungsstation 110 sind Sprühdüsen 118 ausgebildet.

Die Sprühdüsen 118 sind eine Reinigungseinrichtung für das Beaufschlagen des in der Reinigungsstation 110 angeordneten Werkstücks 102 mit Reinigungsfluid 116. Für das Reinigungsfluid 116 gibt es einen Sammelbehälter 122. Die von dem Werkstück 104 mittels des Reinigungsfluids abgespülten Schmutzpartikel gelangen beim Reinigen des Werkstücks 102 zusammen mit dem Reinigungsfluid 116 in den Sammelbehälter 122.

Die Reinigungsstation 110 umfasst einen Fluidkreislauf mit einem Leitungssystem 120, das an den Sammelbehälter 122 angeschlossen ist. In dem Leitungssystem 120 ist eine Umwälzpumpe 124 angeordnet. Die Umwälzpumpe 124 hat einen einstellbaren Förderdruck. Durch Einstellen des Förderdrucks kann die Menge von Reinigungsfluid 116, das pro Zeiteinheit aus den Sprühdüsen 118 austritt, variiert werden. Außerdem lässt sich damit der Druck des Reinigungsfluids 116 verändern, mit dem ein in der Reinigungsstation 110 angeordnetes Werkstück 104 beaufschlagt wird.

Für das Einstellen des Förderdrucks der Pumpe 124 gibt es in der Anlage 100 eine Baugruppe 130 mit einer Prozessparameter-Einstelleinrichtung 131.

Die Prozessparameter-Einstelleinrichtung 131 ist mit der Umwälzpumpe 124 verbunden. Mit der Umwälzpumpe 124 wird in dem Leitungssystem 120 Reinigungsfluid 116 gefördert. Das Reinigungsfluid 116 wird durch ein System 126 für das Bestimmen einer Schmutzpartikelfracht in dem für das Reinigen des Werkstücks 104 eingesetzten Reinigungsfluid und einer Filtereinrichtung 128 zu den Sprühdüsen 118 bewegt. Das System 126 enthält eine Messeinrichtung 127. Mit der Messeinrichtung 127 kann eine von der Anzahl der Schmutzpartikel in dem für das Reinigen eines Werkstücks eingesetzte Reinigungsfluid abhängige Größe, z.B. eine zu der Anzahl der Schmutzpartikel proportionale Größe ermittelt werden. Für das Bestimmen der Schmutzpartikel wird in dem System 126 ein Teilstrom des dem System 126 zugeführten Reinigungsfluids durch die Messeinrichtung 127 geführt.

Die Messeinrichtung 127 ist kalibrierbar. Wenn die Messeinrichtung 127 kalibriert ist, kann damit die in einer vorgegebenen definierten Schmutzpartikel-Größenklasse liegende absolute Anzahl der Schmutzpartikel in dem für das Reinigen eines Werkstücks eingesetzten Reinigungsfluids ermittelt werden. D. h., mit der-Messeinrichtung 127 kann dann z.B. die absolute Anzahl der Schmutzpartikel in dem Volumen von Reinigungsfluid bestimmt werden, mit dem das Werkstück 104 in der Reinigungsstation abgespült wurde, die in einer bestimmten Schmutzpartikel-Größenklasse liegen.

Für das Kalibrieren einer Messeinrichtung 127 gibt es in dem Leitungssystem 120 eine Impfstelle 121. Über die Impfstelle 121 kann der dem System 126 zugeleiteten Reinigungsflüssigkeit eine exakt definierte Menge Schmutzpartikel zugeführt werden, etwa Silikonkugeln oder auch Metallpartikel, die insbesondere eine unterschiedliche Größe haben können. Aus dem von der Messeinrichtung 127 zu einer über die Impfstelle 121 dem System 126 zugeführten Menge Schmutzpartikel ermittelten Messwert wird darin ein Kalibrierungsfaktor bestimmt, der es ermöglicht, die Messwerte der Messeinrichtung in eine absolute Schmutzpartikel-Anzahl umzurechnen. Darüber hinaus ermöglicht das Zuführen der Schmutzpartikel über die Impfstelle 121 eine Überprüfung der Funktion der Messeinrichtung 127. Um eine sichere Funktion der Messeinrichtung 127 zu gewährleisten, ist es von Vorteil, das System 126 mit einem Volumenstrommessgerät auszubilden. Dieses Volumenstrommessgerät erfasst, ob die Messeinrichtung 127 von Reinigungsfluid durchsetzt wird oder nicht. Mit dem Volumenstrommessgerät kann eine Blockade der Strömung von Reinigungsfluid in der Messeinrichtung erkannt werden. Ein entsprechendes Volumenstrommessgerät ermöglicht außerdem, dass ein erfasster Schmutzpartikel-Anteil zu einem gemessenen Volumenstrom in Relation gebracht werden kann.

Die Anlage 100 enthält eine Einrichtung 152 für das fortlaufende Erfassen einer Eingangsverschmutzung S₁ von Werkstücken in der Reinigungsanlage 100. Die Einrichtung 152 ermittelt die Schmutzpartikelfracht in Reinigungsfluid 116, mit dem ein Werkstück 104 zu Beginn des Reinigungsprozesses für ein bestimmtes Zeitintervall aus den Düsen 118 gereinigt wurde. In der Einrichtung 152 werden hierzu die Schmutzpartikel in einem von Reinigungsfluid durchströmten Testvolumen in einem bestimmten Zeitintervall gezählt. Um zu verhindern, dassan einem Werkstück 104 fest anhaftende Schmutzpartikeldie mit der Einrichtung 152 erfasste Eingangsverschmutzung von Werkstücken verfälschen, ist es von Vorteil, das Werkstück 104 für das Vermessen der Eingangsverschmutzung kurzzeitig einer Reinigung mit einer erhöhten Reinigungsintensität zu unterziehen. Dies kann z.B. dadurch erreicht werden, dass das Werkstück 104 für eine bestimmte Zeit mit Reinigungsfluid aus den Düsen 118 beaufschlagt wird, das unter einem erhöhten Druck steht, so dass auch an dem Werkstück 104 anhaftende Schmutzpartikel sicher abgelöst werden.

Die Einrichtung 152 ermöglicht auch das Ermitteln des nach der VDA-Richtlinie 19 oder nach Norm ISO 16232 bestimmten Sauberkeitswerts für ein der Anlage 100 zugeführtes Werkstück 104. Die Einrichtung 152 kann hierfür in einem Kalibriermodus betrieben werden. In dem Kalibriermodus wird in der Einrichtung 152 aufgezeichnet, wie viele Schmutzpartikel damit bei Werkstücken erfasst werden, deren Sauberkeitswert bekannt ist. Die für ein Werkstück mit der Einrichtung 152 erfasste Zahl der Schmutzpartikel, z.B. die Zahl der Schmutzpartikel in einer bestimmten Partikel-Größenklasse, wird dann anschließend mit dem entsprechenden Sauberkeitswert verglichen. Aus diesem Vergleich wird dann eine Kalibrierkonstante ermittelt.

In der Reinigungsstation 114 kann ein Werkstück 108 zum einen mit Reinigungsflüssigkeit 132 gereinigt werden, die mit einer Umwälzpumpe 134 aus einem Sammelbehälter 136 durch ein Leitungssystem 138 zu Sprühdüsen 140 geführt wird. Zum anderen hat das Leitungssystem 138 einen Leitungszweig 140, an den das Werkstück 108 mittels Adapterstücken 144, 146 angeschlossen werden kann, um damit eine Bohrung 147 in dem Werkstück 108 zu reinigen. Das Werkstück 108 ist hier zwischen den Adapterstücken 144, 146 so eingespannt, dass sich in dem Leitungszweig 142 eine dichte Verbindung zwischen der Leitung, durch die das Reinigungsfluid 132 zu- und abgeführt wird, und dem Werkstück 108 ergibt.

Auch das Leitungssystem 138 enthält eine Filtereinrichtung 148. In dem Leitungszweig 142 des Leitungssystems 138 ist ein System 150 für das Bestimmen einer Schmutzpartikelfracht in der für das Reinigen des Werkstücks mittels Spülen der Werkstückbohrung eingesetzten Reinigungsfluids 132 angeordnet. Mit dem System 150 kann die Schmutzpartikelfracht in Reinigungsfluid 132 bestimmt werden, das durch die Bohrung 147 des Werkstücks 118 geführt ist. Wie das System 126 enthält das System 150 eine Messeinrichtung 157 für das Ermitteln einer von der Anzahl der Schmutzpartikel in der für das Reinigen eines Werkstücks eingesetzten Reinigungsfluid abhängigen Größe, insbesondere einer zu der Anzahl der Schmutzpartikel proportionalen Größe Um die Messeinrichtung 157 kalibrieren zu können, gibt es in dem Leitungssystem 140 ebenfalls eine Impfstelle 143, über die dem System 150 zugeführte Reinigungsflüssigkeit eine exakt definierte Menge von Schmutzteilchen beigemengt werden kann.

Das System 150 ist mit einer Einrichtung 154 für das fortlaufende Erfassen einer Ausgangsverschmutzung S₂ von Werkstücken in der Reinigungsanlage 100 verbunden. Mit der Einrichtung 154 kann eine Schmutzpartikelfracht in dem Reinigungsfluid 132 erfasst werden, das für ein vorbestimmtes Zeitintervall über den Leitungszweig 142 durch die Werkstückbohrung 147 am Ende eines Reinigens des Werkstücks 108 in der Anlage 100 geführt wird. Wie in der Einrichtung 152 werden in der Einrichtung 154 hierzu die Schmutzpartikel in einem von Reinigungsfluid durchströmten Testvolumen in einem bestimmten Zeitintervall gezählt. Die Einrichtung 154 ermöglicht ebenfalls das Ermitteln des nach der VDA-Richtlinie 19 oder der Norm ISO 16232 bestimmten Sauberkeitswertes für ein in der Reinigungsstation 145 gereinigtes Werkstück 108. Die Einrichtung 154 kann hierfür in einem Kalibriermodus betrieben werden. In dem Kalibriermodus wird in der Einrichtung 154 aufgezeichnet, wie viele Schmutzpartikel bei einem Werkstück in der Reinigungsstation 114 erfasst werden, deren Sauberkeitswert nach der VDA-Richtlinie 19 oder nach der Norm ISO 16232 bekannt ist. Die für das Werkstück mit der Einrichtung 154 erfasste Zahl der Schmutzpartikel, insbesondere die Zahl der Schmutzpartikel in einer bestimmten Partikelgrößenklasse, wird dann mit dem entsprechenden Sauberkeitswert verglichen und aus diesem Vergleich wird anschließend eine Kalibierkonstante ermittelt. Indem die auf diese Weise ermittelte Kalibrierkonstante über längere Zeiten hinweg einer Auswertung unterzogen wird, ist es außerdem möglich, auf die Änderung der Funktion der Messeinrichtung 127 oder 157 zu schließen.

Die Anlage 100 enthält eine Einrichtung 156 für das fortlaufende Erfassen des Reinigungserfolgs bei einem in der Anlage gereinigten Werkstück. Die Einrichtung 156 ist hierzu mit der Einrichtung 152 für das Erfassen einer Eingangsverschmutzung und mit der Einrichtung 154 für das Erfassen einer Ausgangsverschmutzung verbunden. Die Einrichtung 156 erhält von der Einrichtung 152 eine über das System 126 ermittelte Information über eine Verschmutzung eines Werkstücks 104, das der Anlage 100 zugeführt wird. Von der Einrichtung 154 enthält die Einrichtung 156 die Information über die Verschmutzung eines Werkstückabschnitts in Form der Werkstückbohrung 147, wenn das Reinigen des Werkstücks in der Anlage 100 abgeschlossen ist. In der Einrichtung 156 wird aus der Ein- und Ausgangsverschmutzung eines Werkstücks eine quantitative Größe ermittelt, welche die technische Bedeutung eines Reinigungserfolgs hat. Es ist jedoch auch möglich, in der Einrichtung 156 einen Reinigungserfolg in Form einer Abweichung der Ausgangsverschmutzung eines Werkstücks von einem Sollwert zu berechnen. Bei einem Kalibrieren der Einrichtungen 152 und/oder 154 ist es möglich, den Reinigungserfolg in der Einrichtung 156 auf der Grundlage eines der VDA-Richtlinie 19 oder der Norm ISO 16232 entsprechenden Sauberkeitswerts für das Werkstück anzugeben.

Die Einrichtung 156 ist an die Baugruppe 130 mit der Prozessparameter-Einstelleinrichtung 131 angeschlossen. Der Rechner 170 in der Baugruppe 130 berechnet aus der fortlaufend erfassten Eingangsverschmutzung S₁ und der fortlaufend erfassten Restverschmutzung S₂ als Prozessparameter P einen Förderdruck p für die Umwälzpumpe 124 in der Reinigungsstation 110. Die Prozessparameter-Einstelleinrichtung 131 stellt den Förderdruck p für die Umwälzpumpe 124 in der Reinigungsstation 110 aufgrund der mit dem System 126 ermittelten Eingangsverschmutzung eines der Anlage 100 zugeführten Werkstücks 104 und der mit dem System 154 erfassten Verschmutzung eines Werkstückabschnitts dieses Werkstücks ein, bevor es die Reinigungsanlage 100 verlässt.

Der Rechner 170 ermittelt dabei den Prozessparameter P in Form des Förderdrucks p mit einer von der Restverschmutzung S₂ abhängigen Funktionsvorschrift P := F_{S2}(S₁) zu der Eingangsverschmutzung E1 eines Werkstücks 104, die einem Regelkreis entspricht, der die Funktionsvorschrift aufgrund der Abweichung der erfassten Restverschmutzung S₂ von einem Restverschmutzungs-Sollwert RS bestimmt. Damit wirkt die Baugruppe 130 als eine kombinierte Steuer- und Regeleinrichtung. Die Funktionsvorschrift P := F_{S2}(S₁) ist dabei als ein Kennlinienfeld in einem Datenspeicher des Rechners 170 abgelegt. Es ist möglich, auf diese Weise auch andere Prozessparameter P für das Reinigen von Werkstücken in der Anlage 100 zu berechnen, z.B. die Temperatur von Reinigungsfluid oder die Dauer eines Spülvorgangs für ein Werkstück in einer Reinigungsstation 110, 112, 114.

Mit den Kennlinien in einem solchen Kennlinienfeld ist es dann möglich, aus dem für ein Werkstück erfassten Verschmutzungs- bzw. Sauberkeitszustand für das Reinigen besonders günstige Prozessparameter einzustellen, wie z.B. eine Zeitdauer für das Reinigen eines Werkstücks, die Temperatur des für das Reinigen eingesetzten Reinigungsfluids, die chemische Zusammensetzung des Reinigungsfluids, der Druck, mit dem das Reinigungsfluid beaufschlagt ist, etc.. Der Anfangs- und Endwert einer Kennlinie sowie deren Steilheit ist hier für den oder die Reinigungsprozesse in der Anlage und für die Bauform der Anlage optimiert. Eine Kennlinie ordnet z.B. einer bestimmten, pro Zeiteinheit in dem Reinigungsfluid erfassten Fracht von Schmutzpartikeln, die einer bestimmten Partikelklasse zugehörig sind, einen geeigneten Pumpendruck P für das Umwälzen von Reinigungsfluid in der Anlage 100 zu.

Es ist auch möglich, der Baugruppe 130 die Eingangsverschmutzung eines in der Reinigungsstation 110 angeordneten Werkstückes zu Beginn des Reinigens und die Ausgangsverschmutzung eines Werkstücks in der Reinigungsstation 114 zuzuführen, wenn das Reinigen abgeschlossen ist. Alternativ oder zusätzlich zu dem Einstellen des Pumpendrucks p der Umwälzpumpe 104 ist es grundsätzlich auch möglich, mit der Baugruppe 130 und der Prozessparameter-Einstelleinrichtung 131 andere Prozessparameter zu regeln, wie z. B. die Temperatur des Reinigungsfluids 116, 132 in der Reinigungsstation 110, 112, 114 oder auch die chemische Zusammensetzung des Reinigungsfluids 116 in einer Reinigungsstation 110. Alternativ oder zusätzlich ist es auch möglich, den Öffnungsquerschnitt der Düsen 118, 140 in den Leitungssystemen 120, 138 oder die Länge der Zeitintervalle für einen Reinigungsvorgang in einer Reinigungsstation oder in mehreren der Reinigungsstationen 110, 112, 114 einzustellen. Darüber hinaus ist es z.B. möglich, mit der Baugruppe 130 und der Prozessparameter-Einstelleinrichtung 131 aufgrund des Signals der Regeleinrichtung 156 die Intensität eines in Reinigungsfluid eingekoppelten Ultraschallsignals für die Werkstückreinigung zu regeln. Außerdem ist es möglich, die Baugruppe 130 nicht als Regeleinrichtung sondern nur als eine Steuereinrichtung zu betreiben.

Eine erfindungsgemäße Anlage 100 kann außerdem Sensoren enthalten, mit denen nicht nur eine Schmutzpartikelfracht in Reinigungsfluid erfasst werden kann, sondern auch ein Trübungsgrad von Reinigungsfluid, eine Oberflächenspannung des Reinigungsfluids, ein Tensidgehalt in dem Reinigungsfluid oder auch ein PH-Wert für das Reinigungsfluid. Die Anlage 100 kann darüber hinaus auch Sensoren enthalten, die das Abtasten der Oberfläche von Werkstücken mit Infrarotlicht ermöglichen, um damit auf an der Oberfläche eines Werkstücks angelagerte Fette schließen zu können. Indem diese Sensoren mit der Baugruppe 130 verbunden sind, ist es möglich, die Prozessparameter für das Reinigen von Werkstücken in der Anlage 100 auch aufgrund der mit den vorgenannten Sensoren erfassten Messgrößen auf für das Reinigen günstige Werte einzustellen. Günstig ist es, wenn in der Anlage 100 das Reinigen von Werkstücken in Abhängigkeit des Verschmutzungsgrades von gereinigten Werkstücken, d.h. der Sauberkeit dieser Werkstücke, und des Verschmutzungsgrades von ungereinigten Werkstücken gesteuert wird. Diese Maßnahme ermöglicht nämlich, den Reinigungsablauf hinsichtlich Energie- und Resourcenverbrauch zu optimieren.

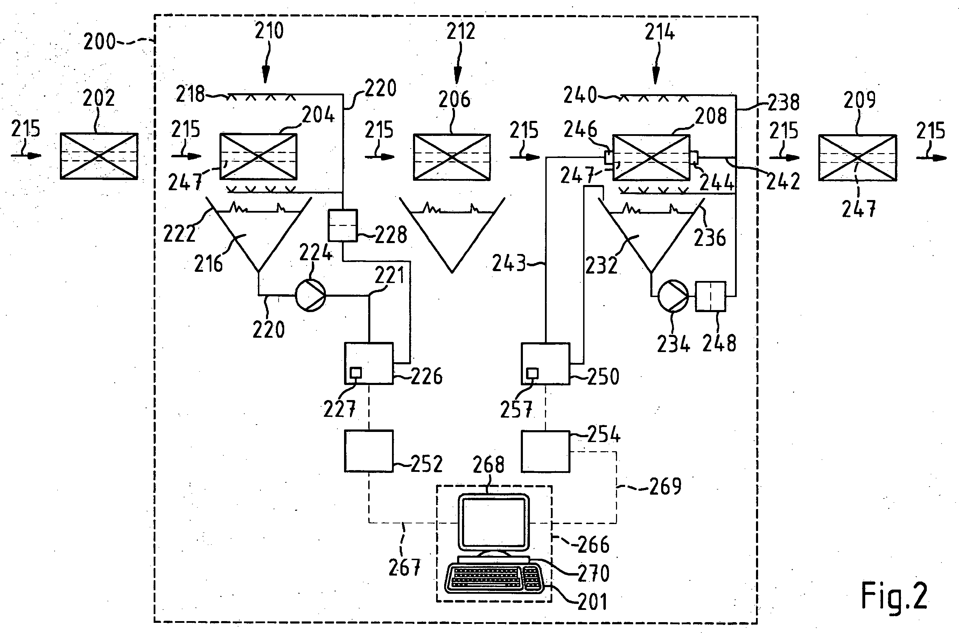

Die in der Fig. 2 gezeigte Anlage 200 hat einen Aufbau, der dem Aufbau der Anlage 100 weitgehend entspricht. Elemente in der Fig. 2, deren Funktion zu den in der Fig. 1 gezeigten Elementen der Anlage 100 identisch ist, sind daher in der Fig. 2 mit im Vergleich zu der Fig. 1 um die Zahl 100 erhöhten Bezugszeichen kenntlich gemacht.

Die Anlage 200 enthält eine Baugruppe 266. Die Baugruppe 266 wirkt als eine Leitstelle, die für das Steuern und Überwachen des Reinigungsvorgangs in der Anlage 200 dient. Mit der Baugruppe 266 können die Prozessparameter für das Reinigen von Werkstücken in den Reinigungsstationen bzw. Reinigungsabschnitten 210, 212, 214 eingestellt werden. Die Baugruppe 266 ist über eine Datenübertragungsstrecke 267, 269 an die Einrichtung 252 für das fortlaufende Erfassen einer Eingangsverschmutzung S₁ an Werkstücken und die Einrichtung für das fortlaufende Erfassen einer Restverschmutzung S₂ von Werkstücken angeschlossen.

Die Baugruppe 266 enthält einen Rechner 270 mit einem Computerprogramm für das Ermitteln von Anlagen-Betriebszuständen und das Schließen auf eine Anlagen-Fehlfunktion aus einem ermittelten AnlagenBetriebszustand. Die Baugruppe 266 hat eine als Warnsignalgenerator wirkende Anzeigeeinheit 268, die einer Bedienperson eine Fehlfunktion der Anlage 200 anzeigt. Die Anzeige der Fehlfunktion bei der Anlage 200 durch die Baugruppe 266 ist dabei in einem über eine Schnittstelle 201 einstellbaren Betriebsmodus mit einer fehlerspezifischen Anzeige eines Warnsignals für eine aufgrund der Signale der Einrichtungen 252, 254 ermittelten Anlagen-Fehlfunktion möglich. Es sei bemerkt, dass für das Anzeigen von Anlagen-Fehlfunktionen die Anzeigeeinheit 268 alternativ oder zusätzlich auch als ein akustischer Warnsignalgenerator ausgebildet sein kann.

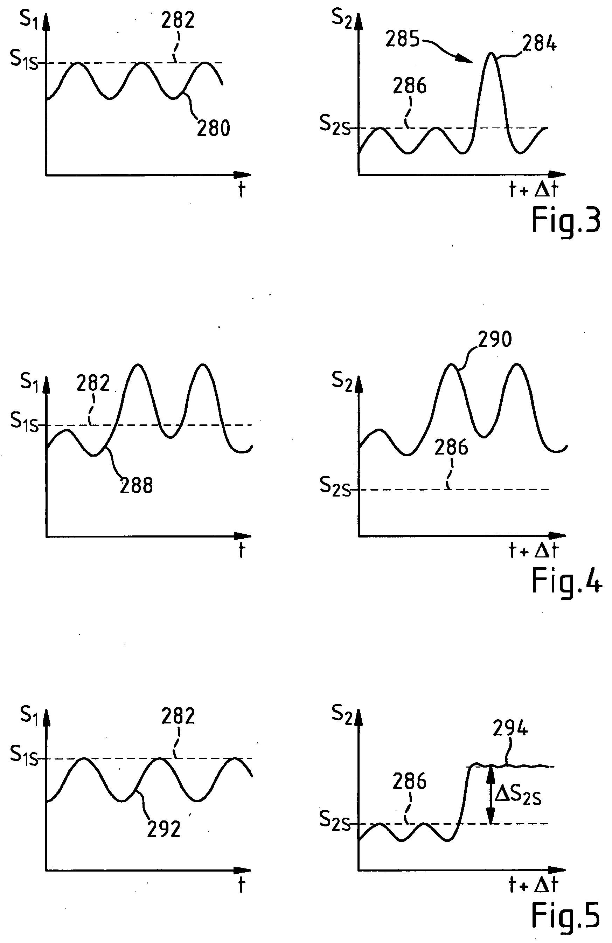

Verschiedene Funktionsweisen der Baugruppe sind nachfolgend anhand von Fig. 3, Fig. 4 und Fig. 5 erläutert, die unterschiedliche Betriebszustände A, B, C der Anlage 200 betreffen. In dem Betriebszustand A der Fig. 3 erhält die Baugruppe von der Einrichtung 252 die Information, dass die in einem bestimmten Zeitraum t entsprechend der Kurve 280 für Werkstücke erfasste Eingangsverschmutzung in Form einer Schmutzpartikelfracht S₁ in Reinigungsfluid, mit dem in dem Reinigungsabschnitt 210 Werkstücke vor dem Reinigen gespült werden, unterhalb eines der Geraden 282 entsprechenden vorgegebenen ersten Sollwerts S_{1S} liegt. Gleichwohl liegt die mit der Einrichtung 254 zu der Zeit t + Δt erfasste Restverschmutzung in Form einer Schmutzpartikelfracht S₂ in Reinigungsfluid, mit dem in dem Reinigungsabschnitt 214 Werkstücke nach dem Reinigen gespült werden, gemäß der Kurve 284 iri dem Abschnitt 285 zeitweise über einem festgelegten zweiten Sollwert S_{2S}. Der zweite Sollwert S_{2S} entspricht der Geraden 286. Das bedeutet, dass ein in dem Reinigungsabschnitt 214 mit Reinigungsfluid gespültes Werkstück übermäßig stark verschmutzt ist, d.h., dass dieses Werkstück nicht korrekt gereinigt wurde.

In dem Betriebszustand A bewirkt das Computerprogramm in dem Rechner 270 der Baugruppe 266 deshalb die fehlerspezifische Warnsignalanzeige, dass wenigstens eine in den Reinigungsabschnitten 210, 212, 214 eingesetzte Baugruppe für das Beaufschlagen von Werkstücken mit Reinigungsfluid fehlerhaft arbeitet.

In dem Betriebszustand B der Fig. 4 erhält die Baugruppe von der Einrichtung 252 die Information, dass die der Eingangsverschmutzung entsprechende Schmutzpartikelfracht S₁ in für das Abspülen von Werkstücken 204 eingesetzten Reinigungsfluid in einem bestimmten Zeitraum t entsprechend der Kurve 288 in Fig. 4 oberhalb des vorgegebenen Sollwerts S_{1S} liegt. Die mit der Einrichtung 254 zu der Zeit t + Δt ermittelte Schmutzpartikelfracht in Reinigungsfluid 232, das durch eine in einem Werkstück ausgebildete Werkstückbohrung geführt wird, liegt hier entsprechend der Kurve 290 oberhalb des Sollwerts S_{2S}. In diesem Betriebszustand B bewirkt das Computerprogramm in dem Rechner 270 der Baugruppe 266 an der Anzeigeeinheit 268 die fehlerspezifische Warnsignalanzeige, dass die Eingangsverschmutzung eines der Anlage 200 zugeführten Werkstücks 202 einen vorgegebenen Grenzwert überschritten hat.

In dem Betriebszustand C der Fig. 5 erhält die Baugruppe 266 von der Einrichtung 252 die Information, dass die Schmutzpartikelfracht in Reinigungsfluid, mit dem Werkstücke in dem Reinigungsabschnitt 210 in einem bestimmten Zeitraum t für das Bestimmen der Eingangsverschmutzung gespült wurden, entsprechend Kurve 292 unterhalb des vorgegebenen Sollwerts S_{1S} liegt. Gleichzeitig liegt hier die mit der Einrichtung 254 zu der Zeit t + Δt erfasste Schmutzpartikelfracht in Reinigungsfluid 232 entsprechend der Kurve 294 mit einem im wesentlichen geraden Verlauf 295 dauerhaft um den Betrag ΔS_{2S} oberhalb des Sollwerts S_{2S}. Hier wird durch das Computerprogramm in dem Rechner 230 der Baugruppe 266 das Anzeigen des fehlerspezifischen Warnsignals ausgelöst, dass die Filtereinrichtung 248 in der Anlage 200 fehlerhaft arbeitet.

Indem die Baugruppe 266 die Information einer Eingangs- und/oder Ausgangsverschmutzung bzw. Sauberkeit von Werkstücken, die in der Anlage 200 gereinigt werden, über einen längeren Zeitraum hinweg aufzeichnet, ist es insbesondere möglich, auf die Qualität von Reinigungsfluid und von Spülsowie Reinigungsbädern in der Anlage, auf die chemische Zusammensetzung von Reinigungsfluid und die Funktion von Filterstufen in der Anlage oder auch auf die Belastung der Anlage mit Schmutzpartikeln und die Funktion von Baugruppen der Anlage Rückschlüsse zu ziehen. Indem die Eingangsverschmutzung von Werkstücken ermittelt wird, lässt sich feststellen, ob die Verschmutzung bei einem betreffenden Werkstück innerhalb eines bei einem Reinigen in der Anlage vorgesehenen Zeitfensters überhaupt entfernt werden kann. Darüber hinaus ermöglicht das Erfassen der Eingangsverschmutzung von Werkstücken die Vorhersage von Wartungsintervallen für bestimmte Baugruppen der Anlage, etwa für Filter und Badflüssigkeiten. Außerdem kann vorgesehen sein, dass die Baugruppe 266 auch ein Warnsignal generiert und geeignete Steuervorgänge auslöst, wenn der Grad der Verschmutzung von Werkstücken, die der Anlage 200 zugeführt werden, außerhalb eines einstellbaren Toleranzbandes liegt.

Es sei bemerkt, dass in einer weiteren Ausführungsform einer erfindungsgemäßen Anlage mit einer Baugruppe auch vorgesehen sein kann, Prozessparameter, wie bei der anhand von Fig. 1 beschriebenen Anlage 100 aufgrund eines mittels der Einrichtungen 152, 154 erfassten Reinigungserfolgs mit einer Regeleinrichtung einzustellen.

Es sei außerdem bemerkt, dass eine erfindungsgemäße Reinigungsanlage sowohl mit einem, als auch mit mehreren Reinigungsabschnitten ausgelegt sein kann. Der Reinigungsprozess in einer Reinigungsanlage kann auch mehrstufig sein. Es ist z.B. günstig, wenn in einer ersten Stufe eine grobe Verschmutzung abgereinigt und dann in einer oder mehrerer auf die erste Stufe folgenden weiteren Stufen ein Reinigungsergebnis für ein Werkstück verbessert wird. Indem Reinigungsfluid, das in dem letzten, abschließenden Reinigungsprozess eingesetzt wird, dürfen dann bei einer einwandfreien Funktion der Anlage nur wenige Schmutzpartikel enthalten sein. Damit ist das Erfassen eines Verschmutzungs- bzw. eines Sauberkeitsgrades von Werkstücken möglich.

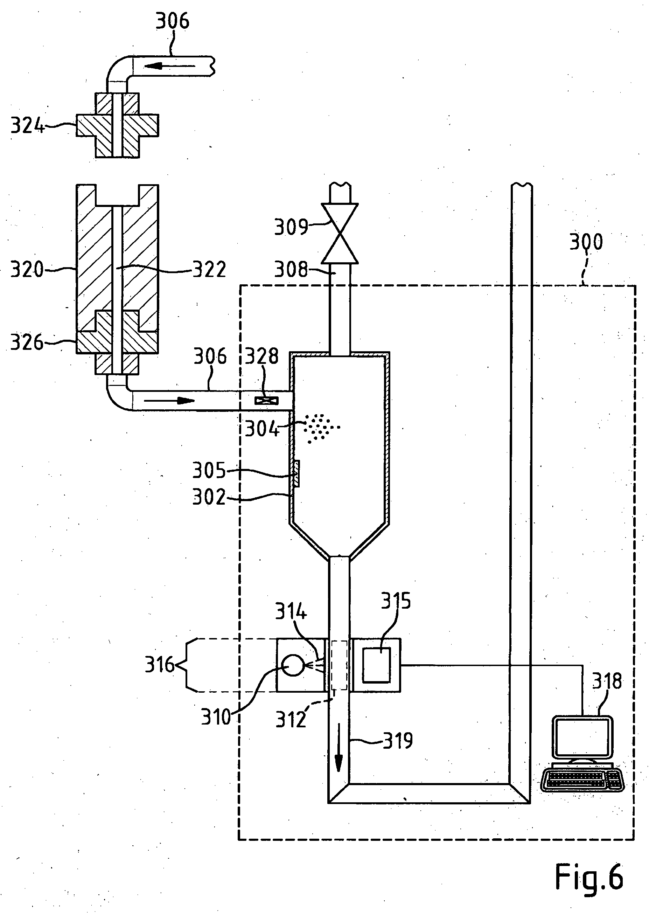

Die Fig. 6 zeigt ein System 300 als mögliche Ausführungsform für ein System 126, 150, 226, 250 in den Anlagen 100 und 200 aus Fig. 1 bzw. Fig. 2. Das System 300 hat einen als Hydrozyklon ausgebildeten Pufferbehälter 302, dem mit Schmutzpartikeln befrachtetes Fluid 304 aus einem Leitungsabschnitt 306 zugeführt wird. Der Pufferbehälter 302 weist einen Rückanschluss 308 mit einem Ventil 309 auf, durch das dem Pufferbehälter 302 Reinigungsfluid 304 zugeführt oder durch das Reinigungsfluid 304 aus dem Pufferbehälter 302 abgeführt werden kann. Der Pufferbehälter 302 mündet in eine Rohrleitung 318, durch die das Reinigungsfluid 304 in einen Kreislauf für Reinigungsfluid einer Anlage zurückgeführt werden kann. In dem Pufferbehälter 302 wird das mit Schmutzpartikeln befrachtete Reinigungsfluid entgast, d.h. insbesondere von Luftblasen befreit. Hierzu gibt es in dem Pufferbehälter 302 eine Einrichtung 305 für das Einkoppeln von Ultraschall in das dort angesammelte Reinigungsfluid. Alternativ hierzu ist es auch möglich, für eine Entgasung von Reinigungsfluid in dem Pufferbehälter 302 das dort angesammelte Reinigungsfluid mit einem Unterdruck oder einem Überdruck gegenüber dem Atmosphärendruck zu beaufschlagen.

Das System 300 enthält eine Messeinrichtung mit einem optischen Partikelzähler. Der optische Partikelzähler umfasst eine Lichtquelle 310 für das Erzeugen von ein Testvolumen 312 mit Reinigungsfluid 304 durchsetzenden Lichtstrahlen 314. Die das Testvolumen 312 durchsetzenden Lichtstrahlen 314 werden zu einem optischen Sensor 315 geführt, der die Intensität der Lichtstrahlen 314 detektiert. In dem System 300 befindet sich das Testvolumen 312 in einem als Glasrohr ausgebildeten Abschnitt 316 der Rohrleitung 319, der für das mit der Lichtquelle 310 erzeugte Licht durchsichtig ist. Aus der Intensität des an dem optischen Sensor 316 für das Erfassen der Intensität der das Testvolumen 312 durchsetzenden Lichtstrahlen 314 kann hier in einer nicht weiter dargestellten Auswerteeinheit auf eine Schmutzpartikelfracht in durch die Rohrleitung 306 bewegtem Reinigungsfluid geschlossen werden.

Die Lichtquelle 310 ist so angebracht, dass das Licht 314 das in dem Testvolumen 312 geführte Reinigungsfluid durchleuchtet. Die in dem Reinigungsfluid mitgeführten Schmutzpartikel streuen und/oder absorbieren dieses Licht. An dem optischen Sensor 315 bilden sie deshalb Schatten. Das Auswirken von Hell- und Dunkelbereichen auf dem optischen Sensor mit einem Rechner 318 ermöglicht hier, die Größe von im Reinigungsfluid mitgeführten Schmutzpartikeln zu vermessen und deren Anzahl zu bestimmen. Diese Messwerte können dann der Einrichtung 156 in der Anlage 100 oder der Baugruppe 266 in der Anlage 200 zugeführt werden. Der Pufferbehälter 302 in dem System 300 wirkt als Einrichtung für das Entfernen von Luftblasen aus dem Reinigungsfluid. Damit wird erreicht, dass der optische Sensor 315 keine Fehlsignale erzeugt.

In dem Leitungsabschnitt 306 kann ein Werkstück 320 angeordnet werden, um eine darin ausgebildete Bohrung 322 zu reinigen und um vor oder nach dem Reinigen den Verschmutzungszustand der Bohrung 322 des Werkstücks 320 zu erfassen. In dem Leitungsabschnitt 306 befinden sich Adapterstücke 324, 326. Die Adapterstücke 324, 326 sind so ausgebildet, dass sie unter Dichtwirkung an das Werkstück 320 angeschlossen werden können. Damit wird nicht nur gewährleistet, dass die Bohrung 322 des Werkstücks 320 mit Reinigungsfluid gereinigt werden kann, das mit einem großen Druck beaufschlagt ist. Diese Maßnahme gewährleistet auch, dass sich aus einer Schmutzpartikelfracht in Reinigungsfluid, das durch eine Bohrung 322 in dem Werkstück 320 geführt ist, der Verschmutzungszustand des Werkstücks bzw. der bei dem Werkstück 320 erzielte Reinigungserfolg präzise ermitteln lässt.

In dem System 300 gibt es ein Volumenstrommessgerät 328. Das Volumenstrommessgerät 328 ermöglicht, die mit dem Rechner 318 ermittelte Anzahl von Schmutzpartikeln auf einen Reinigungsfluidstrom zu beziehen, der dem System von dem Werkstück 320 kommend zugeführt wird. Insbesondere ermöglicht ein solches Volumenmessgerät 328 das Erkennen einer Fehlfunktion des Systems 300, etwa weil dort eine der Rohleitungen 306, 319 blockiert ist.

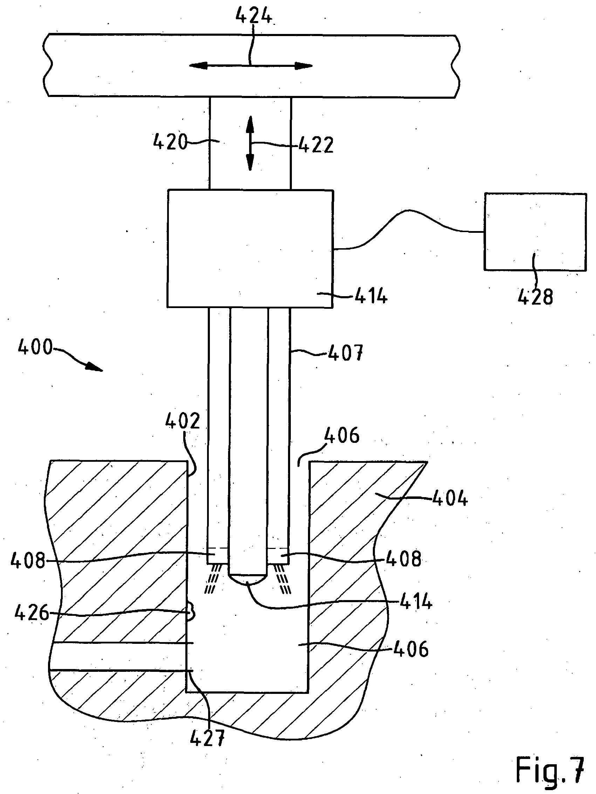

Die Fig. 7 zeigt ein weiteres System 400, mit dem der Reinigungserfolg eines in einer Reinigungsanlage gereinigten Werkstücks bzw. eine Eingangs- und Restverschmutzung bei einem Werkstück ebenfalls ermittelt werden kann. Das System 400 ist eine Messeinrichtung. Das System 400 hat ein Abbildungssystem für das optische Erfassen einer Oberfläche 402 eines Werkstücks 404. Das System 400 kann vor einem Reinigen in einer Reinigungsstation einer Anlage, während des Reinigens in einer Anlage oder auch nach dem Abschließen des Reinigens in einer Anlage eingesetzt werden. Das System 400 umfasst eine in eine Werkstückbohrung 406 einführbare Endoskopsonde 407. Diese Endoskopsonde 407 hat eine Lichtquelle 408, mit der die Wandung 410 der Werkstückbohrung 404 beleuchtet werden kann. Die Endoskopsonde 407 enthält ein Weitwinkelobjektiv 414 mit einem Optiksystem, welche die Wandung 410 der Werkstückbohrung 406 auf den Lichtsensor 416 einer Kamera abbildet, die an einen Auswerterechner 428 angeschlossen ist. Um ein Verlagern der Endoskopsonde 407 relativ zu dem Werkstück 404 zu ermöglichen, ist die Endoskopsonde 407 an einer Positioniereinheit 420 aufgenommen, die für das Verlagern der Endoskopsonde 407 entsprechend der Doppelpfeile 422, 424 dient.

Die Lichtquelle 408 ist an der Endoskopsonde 407 so angeordnet, dass die Wandung 402 der Bohrung 406 nach dem Streiflichtprinzip ausgeleuchtet wird. An der Bohrungswand 402 befindliche Partikel 426 und Grate 427 bilden hier einen Kontrast zwischen Partikel und Bohrungsoberfläche. An der Bohrungswandung 402 können damit die Strukturen von Schmutzteilchen 426 und Graten 427 optisch erfasst werden. Während einem Einfahren der Endoskopsonde 411 in die Bohrung 406 wird durch das an dem vorderen Ende der Endoskopsonde 411 befindliche Weitwinkelobjektiv 414 ein Bild der Wandung 402 der Bohrung 406 aufgenommen und durch die Kamera aufgezeichnet. Um die Schmutzpartikel 426 und Grate 427 zu erfassen, erfolgt in der Rechnereinheit 428 eine Kontrastbestimmung des Gesamtbildes der Oberfläche 402 der Werkstückbohrung 406. Aus diesem Kontrast errechnet dann ein in der Rechnereinheit 428 gespeichertes Computerprogramm ein Bild der Partikel 426 und Grate 427. Sie bestimmt daraus die Partikelgröße. Die Anzahl der Partikel 426 und Grate 427 sowie deren Größe für eine jede geprüfte Bohrung 406 kann dann der Analyseeinrichtung 156 in der Anlage 100 oder der Leistelle 266 in der Anlage 200 zugeführt werden.

Für das Bestimmen der Verschmutzung von Werkstücken ist es im Übrigen auch möglich, in einer erfindungsgemäßen Anlage ein System für das Erfassen von Schmutzpartikeln in Reinigungsfluid vorzusehen, das eine induktive Messeinrichtung enthält. Eine solche induktive Messeinrichtung weist eine oder mehrere Feldspulen auf und umfasst mindestens eine Sensorspule für das induktive Erfassen von metallischen Partikeln. Mit einer solchen induktiven Messeinrichtung können Schmutzpartikel aus Metall sehr genau detektiert werden, selbst wenn sie sehr zahlreich sind.

Mit einer Feldspule in einer induktiven Messeinrichtung wird ein magnetisches Wechselfeld erzeugt, das einen Fluidstrom durchsetzt, der durch einen Leitungsabschnitt der Messeinrichtung geführt wird. Die Feldspule ist hierfür an eine hochfrequente Spannungsquelle angeschlossen. Mit dem magnetischen Wechselfeld werden metallische und magnetische Schmutzpartikel in dem Fluidstrom beaufschlagt. Diese Schmutzpartikel beeinflussen die induktive Kopplung der betreffenden Feldspule mit der wenigstens einen Erregerspule. Aus der mit der wenigstens einen Feldspule in der wenigstens einen Sensorspule induzierten Spannung kann so auf die Anzahl und Größe von Schmutzpartikeln geschlossen werden, die sich durch den Leitungsabschnitt der Messeinrichtung bewegen. Durch den Einsatz von zueinander beabstandeten, gegenseitig gewickelten Sensorspulen ist es damit möglich, in dem Reinigungsfluid vergleichsweise kleine und unmagnetische Partikel zu erkennen, insbesondere Partikel aus Aluminium.

Die Menge von Schmutzpartikeln in Reinigungsfluid kann im Übrigen auch mittels einer Extinktions-Messeinrichtung bestimmt werden. Auch eine Extinktions-Messeinrichtung kann wie eine induktive Messeinrichtung in einer erfindungsgemäßen Anlage vorteilhaft eingesetzt werden.

Die vorstehend beschriebenen Messeinrichtungen eignen sich insbesondere für das Bestimmen der Eingangsverschmutzung von Werkstücken in einer Reinigungsanlage. Diese Messeinrichtungen können nämlich mit einem wirksamen Querschnitt für den Fluidstrom ausgebildet werden, der so groß ist, dass auch eine vergleichsweise große bzw. dichte Schmutzpartikelfracht, wie sie zu Beginn eines Reinigungsvorgangs häufig auftritt, eine solche Messeinrichtung nicht verstopfen kann. Demgegenüber können, um einer Trübung von Reinigungsflüssigkeit Rechnung zu tragen, Messeinrichtungen mit optischen Partikelzählern, wie das in der Fig. 6 gezeigte System enthält, nicht mit dem gleichen wirksamen Querschnitt ausgeführt werden, weil sie ansonsten nicht ausreichend empfindlich sind. Im Übrigen kann bei Messeinrichtungen mit optischen Partikelzählern nur schwer vermieden werden, dass diese neben Schmutzpartikeln auch Luftblasen erfassen, was entsprechende Fehlmessungen verursacht.

Zusammenfassend sind insbesondere folgende bevorzugte Merkmale der Erfindung festgehalten: Die Erfindung betrifft eine Anlage 100, 200 für das Reinigen von Werkstücken 102, 104, 106, 202, 204, 206. Die Anlage enthält eine Reinigungseinrichtung, insbesondere eine Reinigungseinrichtung 118, 144, 146, 218, 240 für das Beaufschlagen eines Werkstücks 104, 106, 204 mit einem Reinigungsfluid. In der Anlage 100, 200 gibt es eine Einrichtung 154, 254 für das Erfassen eines (ersten) Verschmutzungszustands (S₁), z.B. in Form einer Eingangsverschmutzung eines Werkstücks 104, 204 vor einem Reinigen in der Anlage, und/oder eine Einrichtung 152, 254 für das Erfassen eines (zweiten) Verschmutzungszustands (S₂) z.B. in Form einer Restverschmutzung (S₂) eines in der Anlage gereinigten Werkstücks 108, 208, und eine Baugruppe 130, 266, die einen Anlagen-Betriebszustand (A, B, C) ermittelt und/oder wenigstens einen Prozessparameter (P) eines Reinigungsvorgangs in der Anlage in Abhängigkeit eines für Werkstücke 108,208 erfassten ersten und/oder zweiten Verschmutzungszustands (S₁,S₂) einstellt. Die Anlage 100, 200 kann für das Reinigen eine oder mehrere Reinigungsstationen 110, 112, 114, 210, 212, 214 mit einer Reinigungseinrichtung 118,140 aufweisen. In der Anlage gibt es dann eine Einrichtung 152, 252 für das vorzugsweis fortlaufende Erfassen einer Eingangsverschmutzung (S₁) von wenigstens einer Reinigungsstation 110, 112, 114, 210, 212, 214 zugeführten Werkstücken 104, 204 vor dem Reinigen und/ oder eine Einrichtung 154, 254 für das vorzugsweise fortlaufende Erfassen einer Restverschmutzung (S₂) von Werkstücken 108, 208 nach dem Reinigen in wenigstens einer Reinigungsstation 110, 112, 114, 210, 212, 214. Die Anlage 100, 200 weist in diesem Fall eine Baugruppe 130, 266 für das Überwachen des Anlagen-Betriebszustands auf, die mit der Einrichtung 152, 252 für das vorzugsweise fortlaufende Erfassen einer Eingangsverschmutzung (S₁) und/oder mit der Einrichtung 154, 254 für das vorzugsweise fortlaufende Erfassen einer Restverschmutzung (S₂) verbunden ist. Die Baugruppe 130, 266 enthält einen Rechner 170, 270, der aus der vorzugsweise fortlaufend erfassten Eingangsverschmutzung (S₁) und/oder der vorzugsweise fortlaufend erfassten RestVerschmutzung (S₂) einen Anlagen-Betriebszustand (A, B, C) ermittelt und/oder aus der vorzugsweise fortlaufend erfassten Eingangsverschmutzung (S₁) und/oder der vorzugsweise fortlaufend erfassten Restverschmutzung (S₂) den wenigstens einen Prozessparameter (P) für das Reinigen von Werkstücken 104, 106, 108 in der Anlage 100 berechnet.

## Patentansprüche

1. Anlage (100, 200) für das Reinigen von Werkstücken (102, 104, 106, 202, 204, 206),
mit wenigstens einer Reinigungsstation (210, 212, 214), die eine Reinigungseinrichtung (218, 240) aufweist, die für das Beaufschlagen eines Werkstücks (104, 106, 204) mit einem Reinigungsfluid (116, 132) ausgelegt ist,
mit einer Einrichtung (152, 252) für das Erfassen einer Eingangsverschmutzung (S₁) von der wenigstens einen Reinigungsstation (210, 212, 214) zugeführten Werkstücken (204) vor dem Reinigen,
mit einer Einrichtung (154, 254) für das Erfassen einer Restverschmutzung (S₂) von Werkstücken (208) nach dem Reinigen in der wenigstens einen Reinigungsstation, und
mit einem Rechner (170, 270), der mit der Einrichtung (152, 252) für das Erfassen einer Eingangsverschmutzung (S₁) und mit der Einrichtung (154, 254) für das Erfassen einer Restverschmutzung (S₂) verbunden ist
**dadurch gekennzeichnet, dass**
die Einrichtung (152, 252) für das Erfassen einer Eingangsverschmutzung (S₁) und die Einrichtung (154, 254) für das Erfassen einer Restverschmutzuhg eine Schmutzpartikelfracht in einem Restvolumen (312) von einer Messeinrichtung (227) eines für das Spülen eines Werkstücks (104, 108, 204, 208) in einem Reinigungsabschnitt (110, 210, 114, 214) umgewälzten Reinigungsfluids ermittelt, wobei der Rechner (170, 270) aus einem fortlaufenden Vergleich der Eingangsverschmutzung (S₁) von Werkstücken (208) mit einem ersten Schwellwert (S_{1S}) und aus einem fortlaufenden Vergleich der Restverschmutzung (S₂) von Werkstücken (208) mit einem zweiten Schwellwert (S_{2S}) eine Anlagen-Fehlfunktion ermittelt,
wenn die fortlaufend ermittelte Restverschmutzung (S₂) für aufeinanderfolgende Werkstücke (108, 208) im Wesentlichen gleichbleibend ist und den zweiten Schwellwert (S_{2S}) dauerhaft mit einem im Wesentlichen gleichbleibenden Betrag (ΔS_{2S}) überschreitet.

2. Anlage nach Anspruch 1, **dadurch gekennzeichnet, dass** der Rechner (170, 270) aus dem fortlaufenden Vergleich der Eingangsverschmutzung (S₁) von Werkstücken (208) mit einem ersten Schwellwert (S_{1S}) und aus einem fortlaufenden Vergleich der Restverschmutzung (S₂) von Werkstücken (208) mit einem zweiten Schwellwert (S_{2S}) eine weitere Anlagen-Fehlfunktion ermittelt, wenn die fortlaufend ermittelte Eingangsverschmutzung (S₁) den ersten Schwellwert (S_{1S}) unterschreitet und die fortlaufend ermittelte Ausgangsverschmutzung (S₂) den zweiten Schwellwert (S_{2S}) überschreitet.

3. Anlage nach Anspruch 1 oder 2, **dadurch gekennzeichnet, dass** der Rechner (170, 270) aus dem fortlaufenden Vergleich der Eingangsverschmutzung (S₁) von Werkstücken (208) mit einem ersten Schwellwert (S_{1S}) und aus einem fortlaufenden Vergleich der Restverschmutzung (S₂) von Werkstücken (208) mit einem zweiten Schwellwert (S_{2S}) eine weitere Anlagen-Fehlfunktion ermittelt, wenn die fortlaufend ermittelte Eingangsverschmutzung (S₁) den ersten Schwellwert (S_{1S}) überschreitet und die fortlaufend ermittelte Ausgangsverschmutzung (S₂) den zweiten Schwellwert (S_{2S}) überschreitet.

4. Anlage nach einem der Ansprüche 1 bis 3, **dadurch gekennzeichnet, dass** der Rechner (270) für das Anzeigen einer ermittelten Anlagen-Fehlfunktion mit einem Warnsignalgenerator (268) verbunden ist.

5. Anlage nach einem der Ansprüche 1 bis 4, **dadurch gekennzeichnet, dass** der Rechner aus der für die Werkstücke erfassten Eingangsverschmutzung (S₁) und der erfassten Restverschmutzung (S₂) mit einer von der fortlaufend erfassten Restverschmutzung (S₂) abhängigen Funktionsvorschrift P := F_{S2}(S₁) einen Anlagen-Prozessparameter (P) in Form
der Temperatur eines Reinigungsfluids (116), mit dem Werkstücke (104, 204) beaufschlagt werden, und/oder
der chemischen Zusammensetzung eines Reinigungsfluids (116), mit dem Werkstücke (104, 204) beaufschlagt werden, und/oder
des Drucks (p) eines Reinigungsfluids (116), mit dem Werkstücke (104, 204) beaufschlagt werden, und/oder
des Volumenstroms von Reinigungsfluid (116), mit dem Werkstücke (104, 204) beaufschlagt werden, und/oder
der Länge eines Zeitintervalls, in dem Werkstücke (104, 204) in einer Reinigungsstation (110) einem Reinigungsprozess unterzogen werden, und/oder
der Intensität eines in das Reinigungsfluid (116) eingekoppelten Ultraschallsignals für das Reinigen eines Werkstücks (102, 104, 106), und/oder
der Anzahl von der Anlage pro Zeiteinheit zugeführten Werkstücken (102, 104, 106)
berechnet und einstellt.

6. Anlage nach einem der Ansprüche 1 bis 5, **dadurch gekennzeichnet, dass** der Rechner (170) die von der Restverschmutzung (S₂) abhängige Funktionsvorschrift P := F_{S2}(S₁) mit einem Regelkreis aufgrund einer Abweichung der erfassten Restverschmutzung (S₂) von einem Restverschmutzungs-Sollwert (RS) ermittelt und/oder dass die Funktionsvorschrift P := F_{S2}(S₁) als ein Kennlinienfeld in einem Datenspeicher des Rechners abgelegt ist.

7. Anlage nach einem der Ansprüche 1 bis 6, **dadurch gekennzeichnet, dass** die Einrichtung (154, 254) für das Erfassen einer Restverschmutzung (S₂) und/oder die Einrichtung (152, 252) für das Erfassen einer Eingangsverschmutzung (S₁) ein Abbildungssystem (400) für - das optische Erfassen einer Oberfläche (402) eines Werkstücks (404) aufweist und eine Rechnereinheit (428) mit einem Computerprogramm für das Erkennen von Schmutzpartikeln (426, 427) auf der Oberfläche (402) des Werkstücks (404) durch Auswerten eines Kontrasts der Werkstückoberfläche (402) enthält.

8. Anlage nach Anspruch 7, **dadurch gekennzeichnet, dass** das Abbildungssystem (400) eine in Werkstückbohrungen einführbare Endoskopsonde (407) umfasst, die eine Lichtquelle (408) für das Beleuchten der Wandung (412) der Werkstückbohrung (406) hat und die ein Weitwinkelobjektiv (414) für das optische Abbilden der Wandung (412) der Werkstückbohrung (406) auf einem Lichtsensor (408) enthält.

9. Anlage nach Anspruch 8, **gekennzeichnet durch** eine Positioniereinrichtung (420) für das Verlagern der Endoskopsonde (407) relativ zu einem Werkstück (404).

10. Anlage nach einem der Ansprüche 1 bis 9,
**gekennzeichnet durch**
eine mit dem Rechner (130, 270) verbundene Transporteinrichtung, die in Abhängigkeit der mittels des Rechners (130, 270) für ein Werkstück (104, 204) erfassten Eingangsverschmutzung (S₁) und/oder der für ein Werkstück (108, 208) erfassten Restverschmutzung (S₂) das Werkstück (109, 209) nach einem Reinigungsvorgang in der Anlage (100, 200) an einem Anlagenausgang wahlweise freigibt oder einem Anlageneingang zuführt, um ein Reinigen des Werkstücks (108, 208) in der Anlage zu wiederholen.

11. Anlage nach einem der Ansprüche 1 bis 10, **dadurch gekennzeichnet, dass** die Einrichtung (252) für das fortlaufende Erfassen einer Eingangsverschmutzung (S₁) von der wenigstens einen Reinigungsstation (210, 212, 214) zugeführten Werkstücken (204) vor dem Reinigen und/oder die Einrichtung (254) für das fortlaufende Erfassen einer Restverschmutzung (S₂) von Werkstücken (208) nach dem Reinigen in der wenigstens einen Reinigungsstation (210, 212, 214) ein System (300) für das Bestimmen einer Schmutzpartikelfracht in für das Reinigen eines Werkstücks mittels Spülen eingesetztem Reinigungsfluid enthält.

12. Anlage nach Anspruch 11, **dadurch gekennzeichet,** dass das System (300) eine Lichtquelle (310) für das Erzeugen von ein Reinigungsfluid enthaltendes Testvolumen (312) durchsetzenden Lichtstrahlen (314) enthält und einen optischen Sensor (315) für das Erfassen der Intensität der das Testvolumen (312) durchsetzenden Lichtstrahlen (314) aufweist und/oder dass das System (300) eine Einrichtung (302, 305) für das Entfernen von Luftblasen aus Reinigungsfluid enthält, das dem Testvolumen (312) zugeführt wird und/oder dass das System eine induktive Messeinrichtung für das Erfassen von Schmutzpartikeln in dem Reinigungsfluid enthält.

13. Verfahren zum Überwachen einer Anlage (200) für das Reinigen von Werkstücken (202, 204, 206), insbesondere in einer Anlage gemäß einem der Ansprüche 1 bis 13,
bei dem eine Eingangsverschmutzung (S₁) von Werkstücken (204) vor dem Reinigen ertasst wird, und
bei dem eine Restverschmutzung (S₂) von Werkstücken (208) nach dem Reinigen erfasst wird,
**dadurch gekennzeichnet, dass**
für das Erfassen einer Eingangsverschmutzung (S₁) und für das Erfassen einer Restverschmutzung eine Schmutzpartikelfracht in einem Testvolumen (312) von einer Messeinrichtung (227) eines für das Spülen eines Werkstücks (104, 108, 204, 208) in einem Reinigungsabschnitt (110, 210, 114, 214) umgewälzten Reinigungsfluids ermittelt wird und
aus einem fortlaufenden Vergleich der Eingangsverschmutzung (S₁) von Werkstücken (208) mit einem ersten Schwellwert (S_{1S}) und aus einem fortlaufenden Vergleich der Ausgangsverschmutzung (S₂) von Werkstücken (208) mit einem zweiten Schwellwert (S_{2S}) eine AnlagenFehlfunktion ermittelt,
wenn die fortlaufend ermittelte Restverschmutzung (S₂) für aufeinanderfolgende Werkstücke (108, 208) im Wesentlichen gleichbleibend ist und den zweiten Schwellwert (S_{2S}) dauerhaft mit einem im Wesentlichen gleichbleibenden Betrag (ΔS_{2S}) überschreitet.

14. Verfahren nach Anspruch 13 **dadurch gekennzeichnet, dass** aus dem fortlaufenden Vergleich der Eingangsverschmutzung (S₁) von Werkstücken (208) mit einem ersten Schwellwert (S_{1S}) und aus dem fortlaufenden Vergleich der Restverschmutzung (S₂) von Werkstücken (208) mit einem zweiten Schwellwert (S_{2S}) eine weitere AnlagenFehlfunktion ermittelt wird, wenn die fortlaufend ermittelte Eingangsverschmutzung (S₁) den ersten Schwellwert (S_{1S}) unterschreitet und die fortlaufend ermittelte Restverschmutzung (S₂) den zweiten Schwellwert (S_{2S}) überschreitet.

15. Verfahren nach Anspruch 13 oder 14, **dadurch gekennzeichnet, dass** aus dem fortlaufenden Vergleich der Eingangsverschmutzung (S₁) von Werkstücken (208) mit dem ersten Schwellwert (S_{1S}) und aus dem fortlaufenden Vergleich der Restverschmutzung (S₂) von Werkstücken (208) mit dem zweiten Schwellwert (S_{2S}) eine weitere Anlagen-Fehlfunktion ermittelt wird, wenn die fortlaufend ermittelte Eingangsverschmutzung (S₁) den ersten Schwellwert (S_{1S}) überschreitet und die fortlaufend ermittelte Restverschmutzung (S₂) den zweiten Schwellwert (S_{2S}) überschreitet.

## Claims

1. System (100, 200) for cleaning workpieces (102, 104, 106, 202, 204, 206),
having at least one cleaning station (210, 212, 214) which has a cleaning device (218, 240) which is configured for the application of a cleaning fluid (116, 132) to a workpiece (104, 106, 204),
having a device (152, 252) for detecting initial soiling (S₁) of workpieces (204) fed to the at least one cleaning station (210, 212, 214), before the cleaning,
having a device (154, 254) for detecting residual soiling (S₂) of workpieces (208) after the cleaning in the at least one cleaning station, and
having a computer (170, 270) which is connected to the device (152, 252) for detecting initial soiling (S₁) and to the device (154, 252) for detecting residual soiling (S₂),
**characterized in that**
the device (152, 252) for detecting initial soiling (S₁) and the device (154, 254) for detecting residual soiling determines a dirt particle load in a test volume (312) by a measuring device (227) of a cleaning fluid which is circulated for rinsing a workpiece (104, 108, 204, 208) in a cleaning section (110, 210, 114, 214), wherein
the computer (170, 270) determines a system malfunction from continuous comparison of the initial soiling (S₁) of workpieces (208) with a first threshold value (S_{1S}) and from continuous comparison with the residual soiling (S₂) of workpieces (208) with a second threshold value (S_{2S}),
if the continuously determined residual soiling (S₂) for successive workpieces (108, 208) remains essentially the same and continuously exceeds the second threshold value (S_{2S}) with an essentially constant absolute value (ΔS_{2S}).

2. System according to Claim 1, **characterized in that** the computer (170, 270) determines a further system malfunction from the continuous comparison of the initial soiling (S₁) of workpieces (208) with a first threshold value (S_{1S}) and from a continuous comparison of the residual soiling (S₂) of workpieces (208) with a second threshold (S_{2S}), if the continuously determined initial soiling (S₁) undershoots the first threshold value (S_{1S}), and the continuously determined output soiling (S₂) exceeds the second threshold value (S_{2S}).

3. System according to Claim 1 or 2, **characterized in that** the computer (170, 270) determines a further system malfunction from the continuous comparison of the initial soiling (S₁) of workpieces (208) with a first threshold value (S_{1S}) and from a continuous comparison of the residual soiling (S₂) of workpieces (208) with a second threshold value (S_{2S}), if the continuously determined initial soiling (S₁) exceeds the first threshold value (S_{1S}), and the continuously determined output soiling (S₂) exceeds the second threshold value (S_{2S}).

4. System according to one of Claims 1 to 3, **characterized in that** the computer (270) is connected to a warning signal generator (268) for displaying a determined system malfunction.

5. System according to one of Claims 1 to 4, **characterized in that** the computer calculates and sets, on the basis of the initial soiling (S₁) detected for the workpieces and the detected residual soiling (S₂) with a functional rule P:=F_{S2}(S₁) dependent on the continuously detected residual soiling (S₂), a system process parameter (P) in the form
of the temperature of a cleaning fluid (116) which is applied to workpieces (104, 204), and/or
the chemical composition of a cleaning fluid (116) which is applied to the workpieces (104, 204), and/or the pressure (p) of cleaning fluid (116) which is applied to workpieces (104, 204), and/or
of the volume flow of cleaning fluid (116) which is applied to workpieces (104, 204), and/or
the length of a time interval in which workpieces (104, 204) are subjected to a cleaning process in a cleaning station (110), and/or or
the intensity of an ultrasound signal which is input into the cleaning fluid (116), for cleaning a workpiece (102, 104, 106), and/or
of the number of workpieces (102, 104, 106) fed to the system per time unit.

6. System according to one of Claims 1 to 5, **characterized in that** the computer (170) determines the function rule P:=F_{S2}(S₁) dependent on the residual soiling (S₂), with a control loop on the basis of a deviation of the detected residual soiling (S₂) from a residual soiling setpoint value (RS) and/or **in that** the function rule P:=F_{S2}(S₁) is stored as a characteristic curve diagram in a data memory of the computer.

7. System according to one of Claims 1 to 6, **characterized in that** the device (154, 254) for detecting residual soiling (S₂) and/or the device (152, 252) for detecting initial soiling (S₁) has a mapping system (400) for optically detecting a surface (402) of a workpiece (404), and a computer unit (428) with a computer programme for detecting dirt particles (426, 427) on the surface (402) of the workpiece (404) by evaluating a contrast of the workpiece surface (402).

8. System according to Claim 7, **characterized in that** the mapping system (400) comprises an endoscope probe (407) which can be introduced into drilled holes in workpieces and has a light source (408) for illuminating the wall (412) of the drilled hole (406) in the workpiece and which contains a wide-angle lens (414) for optically mapping the wall (412) of the drilled hole (406) in the workpiece onto a light sensor (408).

9. System according to Claim 8, **characterized by** a positioning device (420) for moving the endoscope probe (407) relative to a workpiece (404).

10. System according to one of Claims 1 to 9, **characterized by**
a transport device which is connected to the computer (130, 270), which releases the workpiece (109, 209) to a system exit or which feeds the workpiece (109, 209) to a system entry in order to repeat cleaning of the workpiece (108, 208) in the system as a function of the initial soiling (S₁) detected by means of the computer (130, 270) for a workpiece (104, 204) and/or of the residual soiling (S₂) detected for a workpiece (108, 208) after a cleaning process in the system (100, 200).

11. System according to one of Claims 1 to 10, **characterized in that** the device (252) for continuously detecting initial soiling (S₁) of workpieces (204) fed to the at least one cleaning station (201, 212, 214), before the cleaning, and/or the device (254) for continuously detecting residual soiling (S₂) of workpieces (208) after the cleaning in the at least one cleaning station (210, 212, 214), contains a system (300) for determining a dirt particle load in the cleaning fluid which is used for cleaning a workpiece by means of rinsing.

12. System according to Claim 11, **characterized in that** the system (300) contains a light source (310) for generating light beams (314) which penetrate a test volume (312) containing a cleaning fluid, and has an optical sensor (315) for detecting the intensity of the light beams (314) which penetrate the test volume (312), and/or the system (300) contains a device (302, 305) for removing air bubbles from cleaning fluid which is fed to the test volume (312), and/or **in that** the system contains an inductive measuring device for detecting dirt particles in the cleaning fluid.

13. Method for monitoring a system (200) for cleaning workpieces (202, 204, 206), in particular in a system according to one of Claims 1 to 13,
in which method initial soiling (S₁) of workpieces (204) is detected before the cleaning, and
in which method residual soiling (S₂) of workpieces (208) is detected after the cleaning,
**characterized in that**
for the detection of initial soiling (S₁) and for the detection of residual soiling a dirt particle load in a test volume (312) is determined by a measuring device (227) of a cleaning fluid which is circulated for rinsing a workpiece (104, 108, 204, 208) in a cleaning section (110, 210, 114, 214), and
a system malfunction is determined on the basis of a continuous comparison of the initial soiling (S₁) of workpieces (208) with a first threshold value (S_{1S}) and on the basis of a continuous comparison of the output soiling (S₂) of workpieces (208) with a second threshold value (S_{2S}),
if the continuously determined residual soiling (S₂) for successive workpieces (108, 208) is essentially constant and continuously exceeds the second threshold value (S_{2S}) with an essentially constant absolute value (ΔS_{2S}).

14. Method according to Claim 13, **characterized in that** a further system malfunction is determined on the basis of the continuous comparison of the initial soiling (S₁) of workpieces (208) with a first threshold value (S_{1S}) and on the basis of the continuous comparison of the residual soiling (S₂) of workpieces (208) with a second threshold value (S_{2S}) if the continuously determined initial soiling (S₁) undershoots the first threshold value (S_{1S}) and the continuously determined residual soiling (S₂) exceeds the second threshold value (S_{2S}).

15. Method according to Claim 13 or 14, **characterized in that** a further system malfunction is determined on the basis of the continuous comparison of the initial soiling (S₁) of workpieces (208) with the first threshold value (S_{1S}) on the basis of the continuous comparison of the residual soiling (S₂) of workpieces (208) with the second threshold value (S₂ₛ) if the continuously determined initial soiling (S₁) exceeds the first threshold value (S_{1S}) and the continuously determined residual soiling (S₂) exceeds the second threshold value (S_{2S}).

## Revendications

1. Installation (100, 200) pour le nettoyage de pièces (102, 104, 106, 202, 204, 206),
avec au moins une station de nettoyage (210, 212, 214), qui présente un dispositif de nettoyage (218, 240), qui est conçu pour exposer une pièce (104, 106, 204) à un fluide de nettoyage (116, 132),
avec un dispositif (152, 252) pour détecter un encrassement d'entrée (S₁) de pièces (204) fournies à ladite au moins une station de nettoyage (210, 212, 214) avant le nettoyage,
avec un dispositif (154, 254) pour détecter un encrassement résiduel (S₂) de pièces (208) après le nettoyage dans ladite au moins une station de nettoyage, et
avec un ordinateur (170, 270), qui est relié au dispositif (152, 252) pour détecter un encrassement d'entrée (S₁) et au dispositif (154, 254) pour détecter un encrassement résiduel (S₂),
**caractérisée en ce que**
le dispositif (152, 252) pour détecter un encrassement d'entrée (S₁) et le dispositif (154, 254) pour détecter un encrassement résiduel détermine une charge de particules d'encrassement dans un volume de test (312) par un dispositif de mesure (227) d'un fluide de nettoyage mis en circulation pour le rinçage d'une pièce (104, 108, 204, 208) dans une section de nettoyage (110, 210, 114, 214),
dans lequel l'ordinateur (170, 270) détermine un fonctionnement défectueux de l'installation à partir d'une comparaison continue de l'encrassement d'entrée (S₁) de pièces (208) avec une première valeur de seuil (S_{1S}) et à partir d'une comparaison continue de l'encrassement résiduel (S₂) de pièces (208) avec une deuxième valeur de seuil (S_{2S}),
lorsque l'encrassement résiduel déterminé en continu (S₂) pour des pièces successives (108, 208) est essentiellement constant et dépasse la deuxième valeur de seuil (S_{2S}) durablement d'une quantité essentiellement constante (ΔS_{2S}).

2. Installation selon la revendication 1, **caractérisée en ce que** l'ordinateur (170, 270) détermine un autre fonctionnement défectueux de l'installation à partir de la comparaison continue de l'encrassement d'entrée (S₁) de pièces (208) avec une première valeur de seuil (S_{1S}) et à partir de la comparaison continue de l'encrassement résiduel (S₂) de pièces (208) avec une deuxième valeur de seuil (S_{2S}), lorsque l'encrassement d'entrée déterminé en continu (S₁) descend sous la première valeur de seuil (S_{1S}) et que l'encrassement de sortie déterminé en continu (S₂) dépasse la deuxième valeur de seuil (S_{2S}).

3. Installation selon la revendication 1 ou 2, **caractérisée en ce que** l'ordinateur (170, 270) détermine un autre fonctionnement défectueux de l'installation à partir de la comparaison continue de l'encrassement d'entrée (S₁) de pièces (208) avec une première valeur de seuil (S_{1S}) et à partir d'une comparaison continue de l'encrassement résiduel (S₂) de pièces (208) avec une deuxième valeur de seuil (S₂ₛ), lorsque l'encrassement d'entrée déterminé en continu (S₁) dépasse la première valeur de seuil (S_{1S}) et que l'encrassement de sortie déterminé en continu (S₂) dépasse la deuxième valeur de seuil (S_{2S}).

4. Installation selon l'une quelconque des revendications 1 à 3, **caractérisée en ce que** l'ordinateur (270) est relié à un générateur de signal d'alarme (268) pour afficher un fonctionnement défectueux déterminé de l'installation.

5. Installation selon l'une quelconque des revendications 1 à 4, **caractérisée en ce que** l'ordinateur calcule et règle, à partir de l'encrassement d'entrée (S₁) détecté pour les pièces et de l'encrassement résiduel détecté (S₂), avec une équation de fonction P: = F_{S2}(S₁) dépendant de l'encrassement résiduel détecté en continu (S₂), un paramètre de traitement de l'installation (P) sous la forme
de la température d'un fluide de nettoyage (116), auquel des pièces (104, 204) sont exposées, et/ou de la composition chimique d'un fluide de nettoyage (116), auquel des pièces (104, 204) sont exposées, et/ou
de la pression (p) d'un fluide de nettoyage (116), auquel des pièces (104, 204) sont exposées, et/ou du débit volumique de fluide de nettoyage (116), auquel des pièces (104, 204) sont exposées, et/ou de la longueur d'un intervalle de temps, pendant lequel des pièces (104, 204) sont soumises à un processus de nettoyage dans une station de nettoyage (110), et/ou de l'intensité d'un signal ultrasonore couplé au fluide de nettoyage (116) pour le nettoyage d'une pièce (102, 104, 106), et/ou
du nombre des pièces (102, 104, 106) fournies à l'installation par unité de temps.

6. Installation selon l'une quelconque des revendications 1 à 5, **caractérisée en ce que** l'ordinateur (170) détermine l'équation de fonction P: = F_{S2}(S₁) avec un circuit de régulation sur la base d'un écart entre l'encrassement résiduel détecté (S₂) et une valeur de consigne de l'encrassement résiduel (RS) et/ou **en ce que** l'équation de fonction P: = F_{S2}(S₁) est stockée comme un diagramme caractéristique dans une mémoire de données de l'ordinateur.

7. Installation selon l'une quelconque des revendications 1 à 6, **caractérisée en ce que** le dispositif (154, 254) pour détecter un encrassement résiduel (S₂) et/ou le dispositif (152, 252) pour détecter un encrassement d'entrée (S₁) présente un système de reproduction (400) pour la détection optique d'une surface (402) d'une pièce (404) et contient une unité d'ordinateur (428) avec un programme informatique pour la reconnaissance de particules d'encrassement (426, 427) sur la surface (402) de la pièce (404) par analyse du contraste de la surface (402) de la pièce.

8. Installation selon la revendication 7, **caractérisée en ce que** le système de reproduction (400) comprend une sonde endoscopique (407) à introduire dans des alésages de la pièce, qui comporte une source de lumière (408) pour l'éclairage de la paroi (412) de l'alésage (406) de la pièce et qui contient un objectif à grand angle (414) pour la représentation optique de la paroi (412) de l'alésage (406) de la pièce sur un capteur de lumière (408).

9. Installation selon la revendication 8, **caractérisée par** un dispositif de positionnement (420) pour le déplacement de la sonde endoscopique (407) par rapport à une pièce (404).

10. Installation selon l'une quelconque des revendications 1 à 9, **caractérisée par** un dispositif de transport relié à l'ordinateur (130, 270), qui, en fonction de l'encrassement d'entrée (S₁) détecté au moyen de l'ordinateur (130, 270) pour une pièce (104, 204) et/ou de l'encrassement résiduel (S₂) détecté pour une pièce (108, 208), a le choix, après une opération de nettoyage dans l'installation (100, 200), soit de libérer la pièce (109, 209) à une sortie de l'installation soit de l'envoyer à une entrée de l'installation, pour répéter un nettoyage de la pièce (108, 208) dans l'installation.

11. Installation selon l'une quelconque des revendications 1 à 10, **caractérisée en ce que** le dispositif (252) pour détecter en continu un encrassement d'entrée (S₁) de pièces (204) fournies à ladite au moins une station de nettoyage (210, 212, 214) avant le nettoyage et/ou le dispositif (254) pour détecter en continu un encrassement résiduel (S₂) de pièces (208) après le nettoyage dans ladite au moins une station de nettoyage (210, 212, 214) contient un système (300) pour la détermination d'une charge de particules d'encrassement dans un fluide de nettoyage utilisé pour le nettoyage d'une pièce par rinçage.

12. Installation selon la revendication 11, **caractérisée en ce que** le système (300) comporte une source de lumière (310) pour produire des rayons lumineux (314) traversant un volume de test (312) contenant du fluide de nettoyage et présente un détecteur optique (315) pour détecter l'intensité des rayons lumineux (314) traversant le volume de test (312) et/ou **en ce que** le système (300) comporte un dispositif (302, 305) pour éliminer des bulles d'air hors du fluide de nettoyage, qui est fourni au volume de test (312) et/ou **en ce que** le système comporte un dispositif de mesure à induction pour détecter des particules d'encrassement dans le fluide de nettoyage.

13. Procédé pour surveiller une installation (200) pour le nettoyage de pièces (202, 204, 206), en particulier dans une installation selon l'une quelconque des revendications 1 à 13,
dans lequel on détecte un encrassement d'entrée (S₁) de pièces (204) avant le nettoyage, et
dans lequel on détecte un encrassement résiduel (S₂) de pièces (208) après le nettoyage,
**caractérisé en ce que**
pour la détection d'un encrassement d'entrée (S₁) et pour la détection d'un encrassement résiduel (S₂), on détermine une charge de particules d'encrassement dans un volume de test (312) d'un dispositif de mesure (227) d'un fluide de nettoyage mis en circulation pour le rinçage d'une pièce (104, 108, 204, 208) dans une section de nettoyage (110, 210, 114, 214), et
on détermine un fonctionnement défectueux de l'installation à partir d'une comparaison continue de l'encrassement d'entrée (S₁) de pièces (208) avec une première valeur de seuil (S_{1S}) et à partir d'une comparaison continue de l'encrassement résiduel (S₂) de pièces (208) avec une deuxième valeur de seuil (S_{2S}), lorsque l'encrassement résiduel déterminé en continu (S₂) pour des pièces successives (108, 208) est essentiellement constant et dépasse durablement la deuxième valeur de seuil (S_{2S}) d'une quantité essentiellement constante (ΔS_{2S}).

14. Procédé selon la revendication 13, **caractérisé en ce que** l'on détermine un autre fonctionnement défectueux de l'installation à partir de la comparaison continue de l'encrassement d'entrée (S₁) de pièces (208) avec une première valeur de seuil (S_{1S}) et à partir de la comparaison continue de l'encrassement résiduel (S₂) de pièces (208) avec une deuxième valeur de seuil (S_{2S}), lorsque l'encrassement d'entrée déterminé en continu (S₁) descend sous la première valeur de seuil (S_{1S}) et que l'encrassement résiduel déterminé en continu (S₂) dépasse la deuxième valeur de seuil (S_{2S}).

15. Procédé selon la revendication 13 ou 14, **caractérisé en ce que** l'on détermine un autre fonctionnement défectueux de l'installation à partir de la comparaison continue de l'encrassement d'entrée (S₁) de pièces (208) avec la première valeur de seuil (S_{1S}) et à partir de la comparaison continue de l'encrassement résiduel (S₂) de pièces (208) avec la deuxième valeur de seuil (S_{2S}), lorsque l'encrassement d'entrée déterminé en continu (S₁) dépasse la première valeur de seuil (S_{1S}) et que l'encrassement résiduel déterminé en continu (S₂) dépasse la deuxième valeur de seuil (S_{2S}).
